# EUROPEAN PATENT SPECIFICATION

(11) **EP 4 365 888 B1**
(45) Date of publication and mention of the grant of the patent: **29.07.2026**
(21) Application number: 22851667.0
(22) Date of filing: 19.05.2022
(51) Int. Cl.: G10H 1/00, G06F 16/683, G10H 1/46, G06N 3/02

(54) **METHOD AND APPARATUS FOR PROCESSING AUDIO DATA**
VERFAHREN UND VORRICHTUNG ZUR VERARBEITUNG VON AUDIODATEN
PROCÉDÉ ET APPAREIL DE TRAITEMENT DE DONNÉES AUDIO

(30) Priority: 31.07.2021 CN 202110876809
(43) Date of publication of application: 08.05.2024
(73) Proprietor: Huawei Technologies Co., Ltd., Longgang Shenzhen, Guangdong 518129 (CN)
(72) Inventor: WANG, Zhuo, Shenzhen, Guangdong 518129 (CN); WANG, Meng, Shenzhen, Guangdong 518129 (CN); DU, Chunhui, Shenzhen, Guangdong 518129 (CN); FAN, Fan, Shenzhen, Guangdong 518129 (CN); LIU, Jingwei, Shenzhen, Guangdong 518129 (CN); LI, Xiansheng, Shenzhen, Guangdong 518129 (CN); XU, Dezhu, Shenzhen, Guangdong 518129 (CN)
(74) Representative: Pfenning, Meinig & Partner mbB
(86) International application number: PCT/CN2022/093923
(87) International publication number: WO 2023/010949

(56) References cited:
- WO-A1-2009/107137
- CN-A- 1 938 753
- CN-A- 108 766 407
- CN-A- 112 037 739
- US-A1- 2013 282 388
- US-A1- 2014 254 831
- US-A1- 2018 300 331
- US-A1- 2019 051 272
- US-A1- 2020 410 968
- WOOLLER RENÉ WILLIAM: "Techniques for automated and interactive note sequence morphing of mainstream electronic music", THESIS, QUEENSLAND UNIVERSITY OF TECHNOLOGY, 1 January 2007 (2007-01-01), pages 1 - 355, XP093085766

## Description

### TECHNICAL FIELD

This application relates to the field of multimedia technologies, and in particular, to an audio data processing method and apparatus.

### BACKGROUND

With wide spread and application of digital streaming media music and popularization and development of wireless terminal devices such as a mobile phone, a tablet, and a headset, listening to music becomes a necessity of life for most people in different environments, and people have increasing requirements for diversified music. For example, in addition to listening to audio from beginning to end, people have increasing requirements for audio that is formed by combining a plurality of audio clips, namely, medley audio.

Currently, when medley audio is composed, generally, only at least two audio clips with a high similarity can be spliced for medley composition. However, the medley audio composed in this manner usually has a single style.

Therefore, how to obtain richer and more diversified medley audio is an urgent technical problem to be resolved in the conventional technology.

Wooller Rene William: "Technique for automated and interactive note sequence morphing of mainstream electronic music", 2007-01-01, pages 1-355, discloses that Note sequence morphing is the combination of two note sequences to create a 'hybrid transition', or 'morph'. The morph is a 'hybrid' in the sense that it exhibits properties of both sequences.

US 2018/300331 A1 discloses that a n excerpt of a media object is extracted by computing, for each bar of an N-bar loop, one or more perceptual quality vectors. For each of the one or more perceptual quality vectors within a search zone (S), one or more distances between bar i and bar i+N is computed and sorted to generate a sorted list of bars.

### SUMMARY

The present invention is set out in the appended set of claims.

### BRIEF DESCRIPTION OF DRAWINGS

FIG. 1 is a schematic diagram of a hardware structure of a mobile phone according to an embodiment of this application;
FIG. 2 is a schematic diagram of an audio data processing system according to an embodiment of this application;
FIG. 3 is a schematic flowchart of an audio data processing method according to an embodiment of this application;
FIG. 4(a) to FIG. 4(c) are a schematic diagram of a first operation input by a user on an audio editing interface of an audio editing application according to an embodiment of this application;
FIG. 5(a) and FIG. 5(b) are another schematic diagram of a first operation input by a user on an audio editing interface of an audio editing application according to an embodiment of this application;
FIG. 6 is still another schematic diagram of a first operation input by a user on an audio editing interface of an audio editing application according to an embodiment of this application;
FIG. 7 is still another schematic diagram of a first operation input by a user on an audio editing interface of an audio editing application according to an embodiment of this application;
FIG. 8 is a schematic diagram of a structure of a preset neural network model according to an embodiment of this application;
FIG. 9 is a schematic diagram of a structure of another preset neural network model according to an embodiment of this application;
FIG. 10(a) and FIG. 10(b) are a schematic diagram of a second operation according to an embodiment of this application;
FIG. 11(a) and FIG. 11(b) are a schematic diagram of rendering and outputting MIDI information of target medley audio according to an embodiment of this application;
FIG. 12 is a schematic diagram of a structure of an audio data processing apparatus according to an embodiment of this application; and
FIG. 13 is a schematic diagram of a structure of a signal bearing medium configured to carry a computer program product according to an embodiment of this application.

### DESCRIPTION OF EMBODIMENTS

To better understand embodiments of this application, the following describes some terms or technologies in embodiments of this application.

### (1) Musical instrument digital interface (MIDI)

The MIDI is a most widely used music standard format in the music editing industry, and may be referred to as a "computer-comprehensible music score".

The MIDI records music by using digital control signals of notes. To be specific, the MIDI transmits instructions such as a note and a control parameter instead of a sound signal. These instructions may instruct a MIDI device to play music, for example, instruct the MIDI device to play a specific note at volume indicated in an instruction. The instructions transmitted by the MIDI may be uniformly represented as MIDI messages or MIDI information.

Generally, the MIDI information may be presented in a spectrum form, or may be presented in a data stream form. When the MIDI information is presented in the spectrum form, the MIDI information may be briefly referred to as a MIDI spectrum.

For a music waveform signal stored in a waveform audio file format (WAV) in time domain, when the music waveform signal is transcribed into MIDI information, the MIDI information may be understood as an expression form of the music waveform signal in a MIDI domain. Time domain is domain of time.

It may be understood that the MIDI information may usually include a plurality of tracks. Each track is marked with a start location, an end location, a pitch, velocity information, and the like of a note. One track represents one musical instrument sound/human voice. It may be understood that a complete piece of music expressed by using MIDI information usually has a size of only dozens of kilobytes (KBs), but may include tens of tracks.

Currently, almost all modern music is composed based on MIDI information and a sound library. The sound library (or referred to as a sample library) includes various sounds that can be heard and created by human beings, for example, includes playing of various musical instruments, singing and spoken parts of various human voices, and recording of various natural and artificial sounds.

### (2) Latent space

For a feature output by a specific intermediate layer of a neural network, space obtained after raw data represented by the feature is transformed by several neural network layers may be referred to as latent space. Generally, a dimension of the latent space is less than a spatial dimension of the original data.

The latent space may also be understood as abstract extraction and representation of a feature of the original data.

### (3) Sequence model network and bidirectional sequence model network

Generally, a model in which input or output includes sequence data may be referred to as a sequence model. The sequence model is usually used to process data having a specific ordinal relationship. A neural network used to construct a sequence model may be referred to as a sequence model network.

A common sequence model network includes a recurrent neural network (RNN), a long short-term memory (LSTM), a gated recurrent unit (GRU), a transformer (transformer), and the like.

It should be understood that a prediction result obtained by the sequence model network through prediction at a moment t is usually obtained after learning data of input data before the moment t.

In some cases, when a prediction result obtained by the sequence model network through prediction at the moment t is obtained by learning the data of the input data before the moment t and learning data of the input data after the moment t, the sequence network model is referred to as a bidirectional sequence model network in these cases. It can be learned that, when prediction is performed on the input data, the bidirectional sequence network model performs result prediction with reference to context information of the moment t in the input data.

It should be understood that the bidirectional sequence model may obtain a prediction result through prediction at any moment of the input data.

A common bidirectional sequence model network includes a (bidirectional) recurrent neural network ((bidirectional) recurrent neural network, (Bi-)RNN), a (bidirectional) long short-term memory ((bidirectional) long short-term memory, (Bi-)LSTM), a (bidirectional) gated recurrent unit ((bidirectional) gated recurrent unit, (Bi-)GRU), a transformer (transformer), and the like.

### (4) Other terms

In embodiments of this application, the word such as "an example" or "for example" represents giving an example, an illustration, or description. Any embodiment or design scheme described by using "example" or "for example" in embodiments of this application should not be construed as being more preferred or advantageous than another embodiment or design scheme. To be precise, the word such as "example" or "for example" is intended to present a related concept in a specific manner.

The terms "first" and "second" in embodiments of this application are merely intended for a purpose of description, and cannot be understood as an indication or implication of relative importance or implicit indication of a quantity of indicated technical features. Therefore, a feature limited by "first" or "second" may explicitly or implicitly include one or more features. The term "at least one" in this application means one or more. In the description of this application, unless otherwise stated, "a plurality of" means two or more than two.

It should be further understood that, the term "and/or" used in this specification indicates and includes any or all possible combinations of one or more items in associated listed items. The term "and/or" describes an association relationship between associated objects and represents that three relationships may exist. For example, A and/or B may represent the following three cases: Only A exists, both A and B exist, and only B exists. In addition, the character "/" in this application generally indicates an "or" relationship between associated objects.

It should be further understood that sequence numbers of processes do not mean execution orders in embodiments of this application. The execution orders of the processes should be determined based on functions and internal logic of the processes, and should not be construed as any limitation on the implementation processes of embodiments of this application.

It should be understood that determining B based on A does not mean that B is determined based on only A, but B may be alternatively determined based on A and/or other information.

It should be further understood that when being used in this specification, the term "include" (or "includes", "including", "comprises", and/or "comprising") specifies the presence of stated features, integers, steps, operations, elements, and/or components, but does not preclude the presence or addition of one or more other features, integers, steps, operations, elements, components, and/or groups thereof.

It should be understood that medley composition described below in embodiments of this application indicates a process of extracting a plurality of audio clips from different audio, and combining the plurality of audio clips in series according to a preset order. The preset order is a medley composition order of the plurality of audio clips.

An embodiment of this application provides an audio data processing method. In the method, m - 1 pieces of transition audio information are first determined based on m audio clips that are obtained in advance, and then the m audio clips are spliced based on the m - 1 pieces of transition audio information, to generate target medley audio obtained after medley composition is performed on the m audio clips. One piece of transition audio information is used to splice two audio clips that are adjacent in a medley composition order.

When medley composition is performed on a plurality of audio clips by using the method, a feature similarity between the plurality of audio clips does not need to be considered. Therefore, rich and diversified styles of medley audio can be obtained by using the method in this embodiment of this application.

An embodiment of this application further provides an audio data processing apparatus. The processing apparatus may be a terminal device. The terminal device may be a portable device such as a mobile phone, a tablet computer, a notebook computer, a personal digital assistant (PDA), a netbook, or a wearable electronic device (such as a smart watch or smart glasses); or may be a desktop computer, a smart television, a vehicle-mounted device, or the like. Alternatively, the terminal device may be any other terminal device that can implement this embodiment of this application. This is not limited in this application.

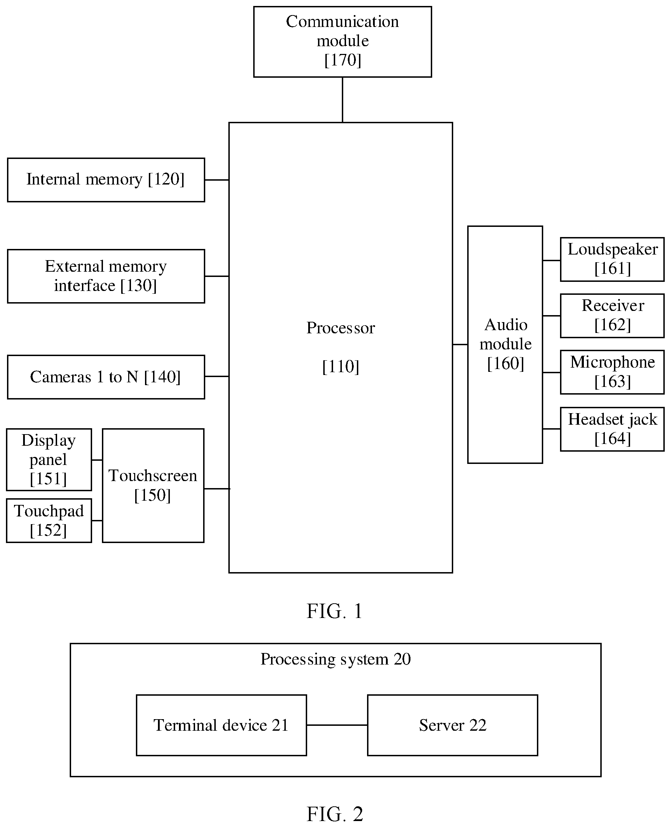

For example, the processing apparatus is a mobile phone. FIG. 1 is a schematic diagram of a hardware structure of a mobile phone 10 according to an embodiment of this application. As shown in FIG. 1, the mobile phone 10 may include a processor 110, an internal memory 120, an external memory interface 130, a camera 140, a touchscreen 150, an audio module 160, a communication module 170, and the like.

The processor 110 may include one or more processing units. For example, the processor 110 may include an application processor (AP), a modem processor, a graphics processing unit (GPU), an image signal processor (ISP), a controller, a memory, a video codec, a digital signal processor (DSP), a baseband processor, and/or a neural-network processing unit (NPU). Different processing units may be independent components, or may be integrated into one or more processors.

The controller may be a nerve center and a command center of the mobile phone 10. The controller may generate an operation control signal based on an instruction operation code and a time sequence signal, to complete control on instruction fetching and instruction execution.

The NPU is a neural-network (NN) computing processor, and quickly processes input information by emulating a biological neural network structure, for example, by emulating a mode of transfer between human-brain neurons, and may further perform self-learning constantly. The NPU can implement applications such as intelligent cognition of the mobile phone 10, for example, text recognition, image recognition, and facial recognition.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a subscriber identity module (SIM) interface, a universal serial bus (USB) interface, and/or the like.

The I2C interface is a two-way synchronization serial bus, and includes one serial data line (SDA) and one serial clock line (SCL). The I2S interface may be configured to perform audio communication. The PCM interface may also be configured to: perform audio communication, and sample, quantize, and encode an analog signal. The UART interface is a universal serial data bus, and is configured to perform asynchronous communication. The bus may be a two-way communication bus. The bus converts to-be-transmitted data between serial communication and parallel communication. The MIPI interface may be configured to connect the processor 110 to a peripheral component such as the camera 140 and the touchscreen 150. The MIPI interface includes a camera serial interface (CSI), a touchscreen serial interface (DSI), and the like. The GPIO interface may be configured by using software. The GPIO interface may be configured as a control signal or a data signal.

The internal memory 120 may be configured to store computer-executable program code. The executable program code includes instructions. The processor 110 runs the instructions stored in the internal memory 120, to perform various function applications and data processing of the mobile phone 10, for example, perform the audio data processing method provided in this embodiment of this application.

The external memory interface 130 may be configured to connect to an external memory card, for example, a micro SD card, to extend a storage capability of the mobile phone 10. The external memory card communicates with the processor 110 through the external memory interface 130, to implement a data storage function. For example, files such as music, a video, or an image are stored in the external storage card.

The camera 140 is configured to obtain a static image or a video. An optical image of an object is generated through a lens, and is projected onto a photosensitive element. The digital signal processor is configured to process a digital signal, and may process another digital signal in addition to a digital image signal. It should be understood that the mobile phone 10 may include n cameras 140, where n is a positive integer.

The touchscreen 150 is configured to perform interaction between the mobile phone 10 and a user. The touchscreen 150 includes a display panel 151 and a touchpad 152. The display panel 151 is configured to display a text, an image, a video, and the like. The touchpad 152 is configured to input an instruction of the user.

The audio module 160 is configured to convert digital audio information into an analog audio signal for output, and is further configured to convert analog audio input into a digital audio signal. The audio module 160 may include at least one of a loudspeaker 161, a receiver 162, a microphone 163, and a headset jack 164.

The loudspeaker 161, also referred to as a "horn", is configured to convert an audio electrical signal into a sound signal. The receiver 162, also referred to as an "earpiece", is configured to convert an audio electrical signal into a sound signal. The microphone 163, also referred to as a "mike" or a "mic", is configured to convert a sound signal into an electrical signal. The headset jack 164 is configured to connect to a wired headset. The headset jack 164 may be a USB interface, or may be a 3.2 mm open mobile terminal platform (OMTP) standard interface or a cellular telecommunications industry association of the USA (CTIA) standard interface.

In this way, the mobile phone 10 may implement an audio function by using the loudspeaker 161, the receiver 162, the microphone 163, the headset jack 164, the application processor, and the like in the audio module 160, for example, voice input, and speech/music playing of the user.

The communication module 170 is configured to implement a communication function of the mobile phone 10. Specifically, the communication module 170 may be implemented by using an antenna, a mobile communication module, a wireless communication module, a modem processor, a baseband processor, and the like.

The antenna is configured to transmit and receive an electromagnetic wave signal. Each antenna in the mobile phone 10 may be configured to cover one or more communication bands. Different antennas may be further multiplexed, to improve antenna utilization. For example, an antenna 1 used for the mobile communication module may be multiplexed as a diversity antenna of a wireless local area network. In some other embodiments, the antenna may be used in combination with a tuning switch.

The mobile communication module may provide a solution applied to the mobile phone 10 for wireless communication including 2G/3G/4G/5G, and the like. The mobile communication module may include at least one filter, a switch, a power amplifier, a low noise amplifier (LNA), and the like. The mobile communication module may receive an electromagnetic wave through the antenna, perform processing such as filtering and amplification on the received electromagnetic wave, and transmit the processed electromagnetic wave to the modem processor for demodulation. The mobile communication module may further amplify a signal modulated by the modem processor, and convert the amplified signal into an electromagnetic wave for radiation through the antenna. In some embodiments, at least some functional modules of the mobile communication module may be disposed in the processor 110. In some embodiments, at least some functional modules of the mobile communication module may be disposed in a same component as at least some modules of the processor 110. The modem processor may include a modulator and a demodulator.

The wireless communication module may provide a solution applied to the mobile phone 10 for wireless communication including a wireless local area network (WLAN) (for example, a wireless fidelity (Wi-Fi) network), Bluetooth (BT), a GNSS, frequency modulation (FM), a near field communication (NFC) technology, an infrared (IR) technology, and the like. The wireless communication module may be one or more components integrating at least one communication processing module. The wireless communication module receives an electromagnetic wave through an antenna, performs frequency modulation and filtering processing on the electromagnetic wave signal, and sends the processed signal to the processor 110. The wireless communication module may further receive a to-be-sent signal from the processor 110, perform frequency modulation and amplification on the to-be-sent signal, and convert the signal into an electromagnetic wave for radiation through the antenna.

For example, the GNSS in this embodiment of this application may include a global positioning system (GPS), a global navigation satellite system (GLONASS), a BeiDou navigation satellite system (BDS), a quasi-zenith satellite system (QZSS), and/or a satellite based augmentation system (SBAS).

It may be understood that the structure shown in this embodiment of this application constitutes no specific limitation on the mobile phone 10. In some other embodiments of this application, the mobile phone 10 may include more or fewer components than those shown in the figure, some components may be combined, some components may be split, or different component arrangements may be used. The components shown in the figure may be implemented by hardware, software, or a combination of software and hardware.

It should be noted that, when the foregoing processing apparatus is a terminal device, the foregoing audio data processing method may be implemented by using an application (App) installed on the terminal device. The app has an audio editing function. For example, the app may be a music editing app.

The app may be an app having a manual intervention function. Herein, manual intervention means that the app can receive an instruction input by a user, and can respond to the instruction input by the user. In other words, the app can interact with the user. The app may include an interaction interface used to interact with a user. The interaction interface is displayed through a display (for example, the display panel 151 shown in FIG. 1) of the terminal device.

It should be understood that, if the terminal device includes a touchscreen (for example, the touchscreen 150 shown in FIG. 1), the user may implement interaction with the app by operating the touchscreen of the terminal device (for example, operating the touchpad 152 shown in FIG. 1). If the terminal device does not include a touchscreen (for example, the terminal device is a common desktop computer), the user may interact with the app by using an input/output component such as a mouse or a keyboard of the terminal device.

It should be further understood that the foregoing app may be an embedded application (namely, a system application of the terminal device) installed on the terminal device, or may be a downloadable application.

The embedded application is an application provided by an operating system of a device (such as a mobile phone). For example, the embedded application may be a music application provided when the mobile phone is delivered. The downloadable application is an application that can provide a communication connection of the downloadable application. The downloadable application is an app that may be pre-installed on a device, or may be a third-party app that is downloaded by a user and installed on a device. For example, the downloadable application may be a music editing app. This is not specifically limited in this embodiment of this application.

It should be further noted that the processing apparatus may be alternatively a server. In this case, an embodiment of this application further provides an audio data processing system. The processing system includes a server and a terminal device. The server and the terminal device may be connected and communicate in a wired or wireless manner.

FIG. 2 is a schematic diagram of a processing system 20 according to an embodiment of this application. The processing system 20 includes a terminal device 21 and a server 22. The terminal device 21 may interact with a user by using a client app (for example, a client app for audio editing), for example, receive an instruction input by the user, and transmit the received instruction to the server 22. Then, the server 22 is configured to: perform, according to the instruction received from the terminal device 21, the audio data processing method provided in this embodiment of this application, and send MIDI information of generated target medley audio and/or the target medley audio to the terminal device 21. In this way, the terminal device 21 may receive the MIDI information of the target medley audio and/or the target medley audio that are/is sent by the server 22, play the target medley audio for the user through an audio module, and/or display a MIDI spectrum of the target medley audio for the user through a display. This is not limited.

With reference to the accompanying drawings, the following describes in detail the audio data processing method provided in embodiments of this application.

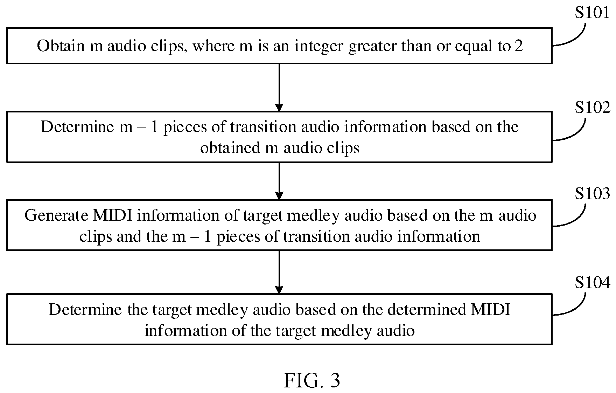

FIG. 3 is a schematic flowchart of an audio data processing method according to an embodiment of this application. The method is performed by the audio data processing apparatus described above. An example in which the audio data processing apparatus is a terminal device is used below. The method may include the following steps.

S101: Obtain m audio clips, where m is an integer greater than or equal to 2.

The m audio clips include clips in different audio.

Specifically, the terminal device may first determine k pieces of target audio, and then extract the m audio clips from the k pieces of target audio. Herein, 2 ≤ k ≤ m, and k is an integer.

In other words, the terminal device may extract at least one audio clip from one piece of target audio.

S102: Determine m - 1 pieces of transition audio information based on the obtained m audio clips.

The m - 1 pieces of transition audio information are used to splice the m audio clips. For first transition audio information in the m - 1 pieces of transition audio information, the first transition audio information is transition audio information used to splice a first audio clip and a second audio clip that are sorted consecutively in the m audio clips obtained by the terminal device. It should be understood that sorting herein is sorting of a medley composition order of the m audio clips. It should be understood that the medley composition order is predetermined by the terminal device.

Specifically, the terminal device may determine the m - 1 pieces of transition audio information based on a preset neural network model and information of the m audio clips obtained in step S101. Herein, the transition audio information is MIDI information of a transition audio clip.

S103: Generate MIDI information of target medley audio based on the m audio clips and the m - 1 pieces of transition audio information.

The terminal device connects MIDI information of the m audio clips by using the m - 1 pieces of transition audio information (namely, the MIDI information of the transition audio clip), to generate the MIDI information of the target medley audio.

S104: Determine the target medley audio based on the determined MIDI information of the target medley audio.

Optionally, the terminal device may further output the target medley audio after determining the target medley audio based on the MIDI information of the target medley audio.

According to the method provided in this embodiment of this application, the terminal device may generate, based on the m audio clips, the m - 1 pieces of transition audio information used to splice the m audio clips. In this way, the MIDI information of the m audio clips may be spliced by using the m - 1 pieces of transition audio information, to obtain the MIDI information of the target medley audio after medley composition is performed on the m audio clips. In this way, the target medley audio is obtained when the terminal device converts the MIDI information of the target medley audio into an audio format. It may be learned that, when medley composition is performed on a plurality of audio clips in this manner, a terminal may generate a brand new transition audio clip used to splice the plurality of audio clips. Therefore, in the method provided in this embodiment of this application, there is no need to consider a similarity between audio clips used to obtain the target medley audio. In other words, richer and more diversified medley audio can be obtained by using the method provided in this embodiment of this application.

In addition, a process of generating transition audio information in the method provided in this embodiment of this application is implemented in the MIDI domain. MIDI information of audio is a most original representation form of the audio, and records information such as a note pitch, a note velocity, and note duration of the audio. Therefore, compared with direct medley composition performed on a plurality of audio clips in time domain, in the method provided in this embodiment of this application, transition audio information used to splice two audio clips can be generated based on an audio music theory. In this way, the medley audio obtained based on the transition audio information sounds more fluent and natural. In addition, data processing in the MIDI domain is more conducive to flexibility and consistency of the medley audio during later rendering.

The following describes steps S101 to S104 in detail:

In step S101, it may be understood that, a piece of audio in step S101 may be a complete/an incomplete song or a complete/an incomplete piece of music, and an audio clip is a section of audio captured from a piece of audio. It should be further understood that audio or an audio clip has a time sequence feature.

Optionally, the terminal device may randomly determine k pieces of audio in a media database or a locally stored music database as the k pieces of target audio.

Optionally, the terminal device may first receive a first operation input by a user, and respond to the first operation, to determine the k pieces of target audio. It may be understood that an application having an audio editing function is installed on the terminal device, and the first operation is an operation performed by the user on an audio editing interface of the application.

In a possible implementation, the first operation may include a selection operation, performed by the user, of target audio on the audio editing interface. Optionally, the selection operation may include a selection operation of the music database and an operation of selecting the target audio from the selected music database.

The music database may be a locally stored music database, or may be a music database obtained after a system classifies audio based on a scenario tag, an emotion tag, a style tag, and the like of the audio, or may be a music database automatically recommended by the system, or may be a customized music database obtained through configuration after a user deletes or adds audio in a music database obtained based on recommendation or classification of the system. This is not limited in this embodiment of this application. Herein, the system may be any media system that is connected to and communicates with an application that has an audio editing function and that is installed on the terminal device. This is not limited in this embodiment of this application.

For example, the music database recommended by the system may be a music database that is recommended by the system based on a current scenario/status detected by a sensor of the terminal device, of the user. For example, when the sensor of the terminal device detects that the current status of the user is a running state, the system may recommend a music database including dynamic music to the user. Alternatively, the music database recommended by the system may be a music database of streaming media that is randomly displayed, for example, major music ranking lists, or a music database including popular classic music, and the like.

It should be noted herein that each piece of audio during production may be marked with a tag including but not limited to a scenario, a style, an emotion, and the like. The scenario indicates a scenario suitable for listening to the audio, and may be, for example, a working scenario, a learning scenario, or a running scenario. The style indicates a music style of the audio, and may be, for example, rock music, electronic music, or light music. The emotion indicates an emotion expressed by the audio, and may be, for example, sadness, love, or loneliness. Details are not described herein.

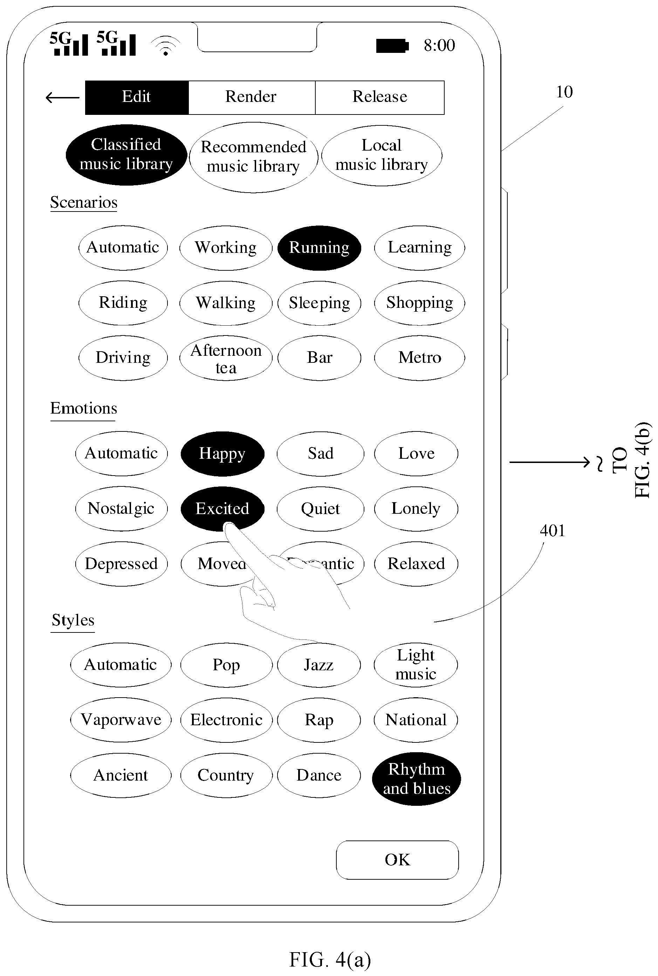

An example in which the terminal device is a mobile phone 10 on which an audio editing application is installed is used. In an example, refer to FIG. 4(a) to FIG. 4(c). FIG. 4(a) to FIG. 4(c) are a schematic diagram of a first operation input by a user on an audio editing interface of an audio editing application according to an embodiment of this application.

As shown in FIG. 4(a), a touchscreen of the mobile phone 10 displays an audio editing interface 401 of the audio editing application. It can be learned that the audio editing interface 401 is a music database selection interface under a "Classified music library" tag. In this case, the user can perform a selection operation of a music database on the audio editing interface 401.

As shown in FIG. 4(a), on the audio editing interface 401, type tags used when a system classifies audio according to different classification standards of the audio are displayed. As shown in the figure, the audio editing interface 401 displays type tags, such as a "Working" tag and a "Running" tag, when the audio is classified based on a scenario suitable for listening to the audio. The audio editing interface 401 further displays type tags, for example, a "Happy" tag and an "Excited" tag, when the audio is classified based on an emotion expressed by the audio. The audio editing interface 401 further displays type tags, for example, a "Pop" tag and a "Rhythm and blues" tag, used when the audio is classified based on a music style of the audio. It is easy to understand that the type tags and display formats of the type tags of the audio shown in FIG. 4(a) are merely examples for description, and are not intended to limit the protection scope of embodiments of this application.

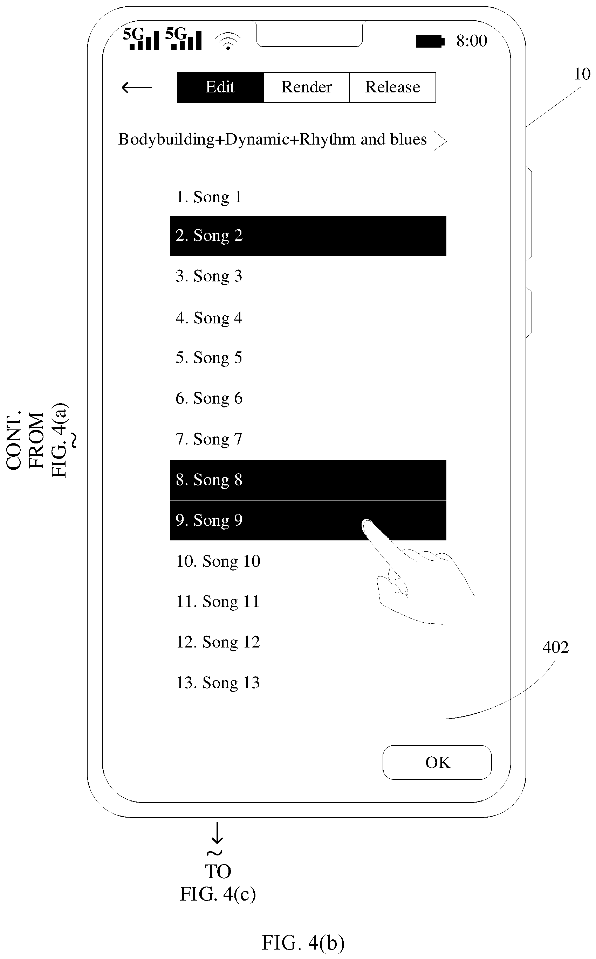

In this way, based on a requirement/preference of the user, the user may operate (for example, tap by using a finger/stylus) a type tag displayed on the audio editing interface 401. For example, the user may separately tap the "Running" tag, the "Happy" tag, the "Excited" tag, and the "Rhythm and blues" tag by using a finger. After the user operates (for example, tap by using a finger/stylus) an "OK" button on the audio editing interface 401, in response to the operation, the mobile phone 10 may display an interface of all audio that is recommended by the system based on the type tags selected by the user and that has the "Running" tag, the "Happy" tag, the "Excited" tag, and the "Rhythm and blues" tag, for example, a target audio selection interface 402 shown in FIG. 4(b). It may be understood that all the audio displayed on the target audio selection interface 402 forms a music database selected by the user.

It may be understood that, when a type tag selected by the user on the audio editing interface 401 is an " Automatic" tag, the audio displayed by the mobile phone 10 on the target audio selection interface 402 is audio that is automatically recommended for the user by the mobile phone 10 based on an environment/status, detected by a sensor (for example, a gyroscope sensor or a noise sensor) configured in the mobile phone 10, of the user currently operating the mobile phone 10 and that is suitable for the user to listen to in the current environment. Details are not described herein.

Further, the user may perform a selection operation of target audio on the target audio selection interface 402. For example, the user may select k pieces of target audio on the target audio selection interface 402 based on the requirement/preference of the user. In response to the operation, the mobile phone 10 determines the k pieces of target audio.

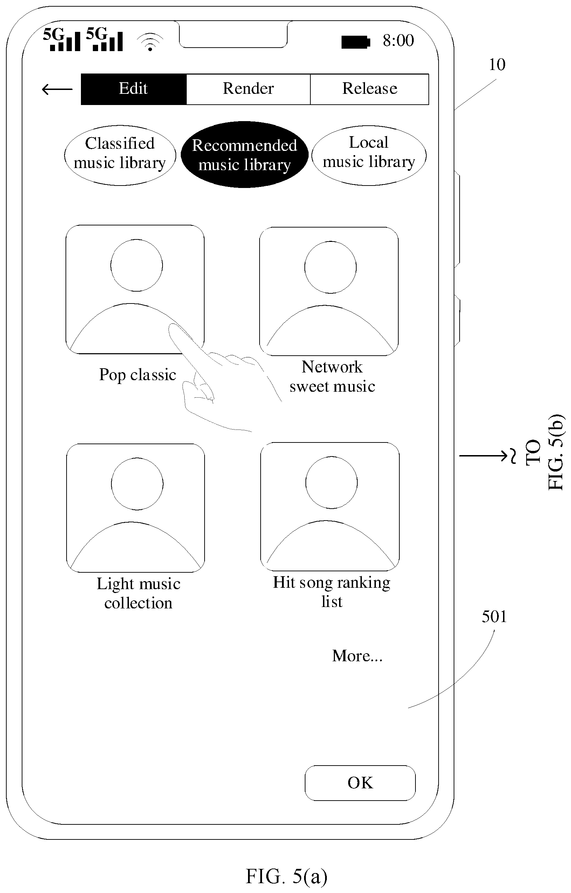

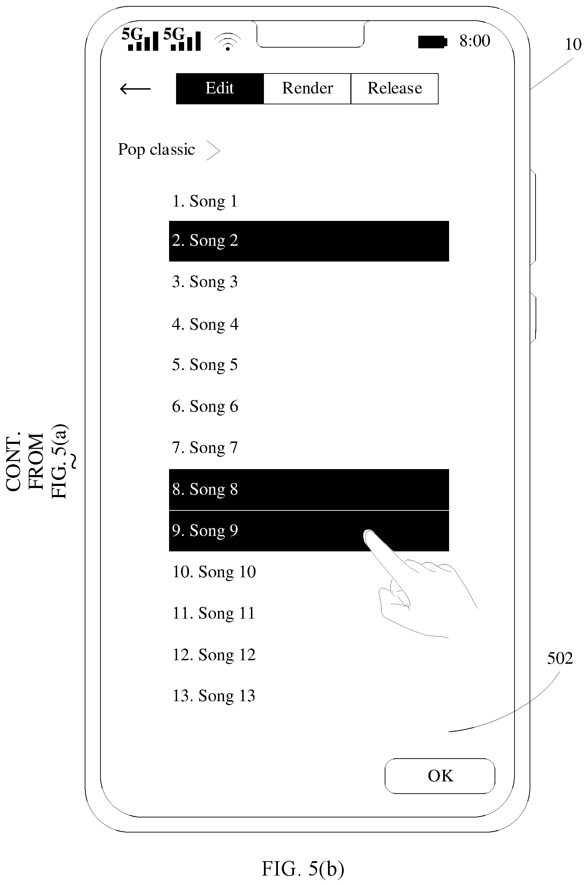

In another example, refer to FIG. 5(a) and FIG. 5(b). FIG. 5(a) and FIG. 5(b) are another schematic diagram of a first operation input by a user on an audio editing interface of an audio editing application according to an embodiment of this application.

As shown in FIG. 5(a), a touchscreen of the mobile phone 10 displays an audio editing interface 501 of the audio editing application. It can be learned that the audio editing interface 501 is a music database selection interface displayed after the user selects a "Recommended music library" tag on the audio editing interface 401. In this case, the user can perform a selection operation of a music database on the audio editing interface 501.

As shown in FIG. 5(a), identifiers of a plurality of music databases presented by the system are displayed on the audio editing interface 501. For example, a "Pop classic" music library identifier, a "Network sweet music" music library identifier, a "Light music collection" music library identifier, and a "Hit song ranking list" music library identifier. It is easy to understand that the music databases and display formats of the identifiers of the music databases shown in FIG. 5(a) are merely an example for description, and are not intended to limit the protection scope of embodiments of this application. For example, the mobile phone 10 may further display identifiers of different types of music databases on a plurality of interfaces. This is not limited herein.

In this way, based on a requirement or preference of the user, the user may operate (for example, tap by using a finger/stylus) a music database (for example, the "Pop classic" music library) displayed on the audio editing interface 501. After the user operates (for example, tap by using a finger/stylus) an "OK" button on the audio editing interface 501, in response to the operation, the mobile phone 10 may display an interface of audio in the "Pop classic" music library, for example, a target audio selection interface 502 shown FIG. 5(b).

Further, the user may perform a selection operation of target audio on the target audio selection interface 502. For example, the user may select k pieces of target audio on the target audio selection interface 502 based on the requirement/preference of the user. In response to the operation, the mobile phone 10 determines the k pieces of target audio.

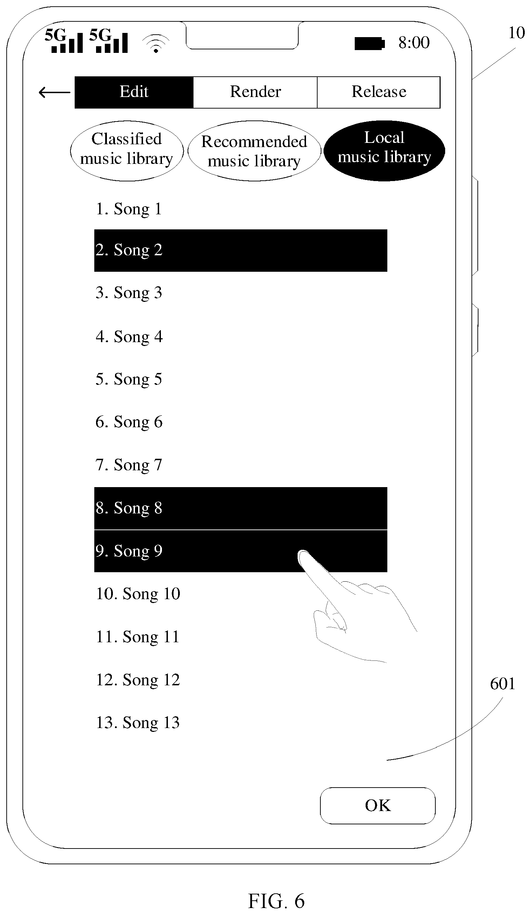

In still another example, refer to FIG. 6. FIG. 6 is still another schematic diagram of a first operation input by a user on an audio editing interface of an audio editing application according to an embodiment of this application.

As shown in FIG. 6, a touchscreen of the mobile phone 10 displays an audio editing interface 601 of the audio editing application. It can be learned that the audio editing interface 601 is a target audio selection interface displayed after the user selects a "Local music library" tag on the audio editing interface 401 or the audio editing interface 501. In this case, the user can perform a selection operation of target audio on the audio editing interface 501.

It may be understood that an operation of displaying the audio editing interface 601 after the user selects the "Local music library" tag on the audio editing interface 401 or the audio editing interface 501 is equivalent to an operation of selecting a local music database on the audio editing interface 401 or the audio editing interface 501 by the user.

As shown in FIG. 6, a plurality of pieces of locally stored audio are displayed on the audio editing interface 601. For example, the plurality of pieces of audio are displayed in a form of a list. In this case, the user may perform a selection operation of target audio on the audio editing interface 601. For example, the user may select k pieces of target audio on the audio editing interface 601 based on a requirement/preference of the user. In response to the operation, the mobile phone 10 determines the k pieces of target audio.

It is easy to understand that display formats of the plurality of pieces of locally stored audio shown in FIG. 6 are merely an example for description, and are not intended to limit embodiments of this application. For example, the mobile phone 10 may further divide the plurality of pieces of locally stored audio into a plurality of groups, and display audio lists in different groups by using a plurality of hierarchical interfaces. This is not limited herein.

In another possible implementation, the first operation may include an input operation of inputting a quantity of pieces of target audio by the user on the audio editing interface and a selection operation of a music database.

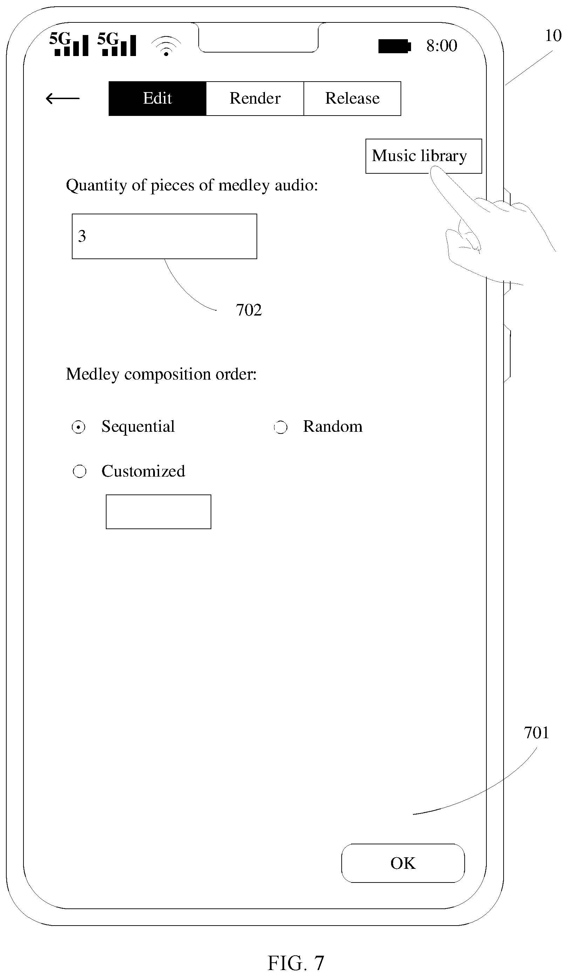

For example, refer to FIG. 7. FIG. 7 is still another schematic diagram of a first operation input by a user on an audio editing interface of an audio editing application according to an embodiment of this application.

As shown in FIG. 7, an audio editing interface 701 shown in FIG. 7 includes an interface (namely, an input box 702) for inputting a quantity of pieces of medley audio. In this case, the user may input the quantity of pieces of medley audio through the input box 702. For example, a value of k is 3. To be specific, the user may input a value "3" in the input box 702.

In addition, the user may select a music database based on a requirement/preference of the user by operating a "Music library" button on the audio editing interface 701. Herein, for a process of selecting a music database displayed after the user operates the "Music library" button on the audio editing interface 701, refer to the foregoing description of FIG. 4(a), FIG. 5(b), and FIG. 6 for selecting a music database. This is not described herein.

After the user selects the music database by operating the "Music library" button on the audio editing interface 701, the mobile phone 10 may select, based on the value of k input by the user in the input box 702, k pieces of audio as the target audio from the music database selected by the user.

Optionally, the mobile phone 10 may select, based on a preset rule and the value of k input by the user in the input box 702, k pieces of audio as the target audio from the music database selected by the user. For example, the mobile phone 10 may randomly select the k pieces of audio as the target audio from the music database, or the mobile phone 10 may use first k pieces of audio in the music database as the target audio. This is not limited in this embodiment of this application.

In this way, after the terminal device determines the k pieces of target audio, the terminal device may extract m audio clips from the k pieces of target audio by using a preset algorithm. For example, the preset algorithm may be an algorithm used to extract a chorus/climax part in a song. This is not limited in this embodiment of this application.

Optionally, a medley composition order of the m audio chips is preset in the terminal device, or the terminal device may further interact with the user to determine a medley composition order of the m audio clips during medley composition.

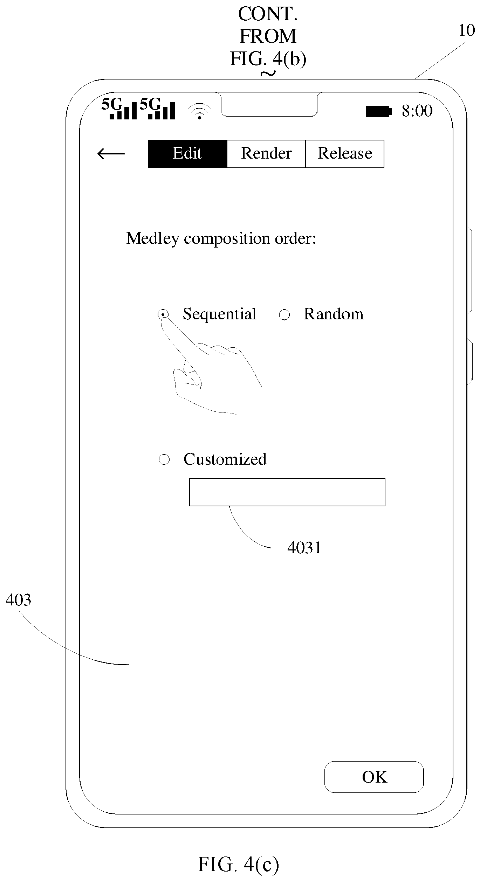

In an example, with reference to FIG. 4(a) to FIG. 4(c), FIG. 5(a), FIG. 5(b), and FIG. 6, after the user selects the k pieces of target audio on the target audio selection interface 402 shown in FIG. 4(b) and performs the operation (for example, taps by using a finger/stylus) on the "OK" button on the target audio selection interface 402, or after the user selects the k pieces of target audio on the target audio selection interface 502 shown in FIG. 5(b) and performs the operation (for example, taps by using a finger/stylus) on the "OK" button on the target audio selection interface 502, or after the user selects the k pieces of target audio on the audio editing interface 601 shown in FIG. 6 and performs the operation (for example, taps by using a finger/stylus) on the "OK" button on the audio editing interface 601, the terminal device (namely, the mobile phone 10) may display a medley composition order selection interface 403 shown in FIG. 4(c). As shown in FIG. 4(c), the medley composition order selection interface 403 may include three options: "Sequential", "Random", and "Customized".

When the user selects the option of "Sequential", in response to the selection, the mobile phone 10 may perform, based on an order of the k pieces of target audio in the music database to which the k pieces of target audio belong, medley composition on the m audio clips extracted from the k pieces of target audio. Optionally, the order of the k pieces of target audio in the music database to which the k pieces of target audio belong may be represented by numbers of the k pieces of target audio in the music database.

When the user selects the option of "Random", in response to the selection, the mobile phone 10 may randomly perform medley composition on the m audio clips extracted from the k pieces of target audio.

When the user selects the option of "Customized", the user may further sequentially input identifiers (for example, numbers) of the k pieces of target audio in a preset order in an option box 4031 of "Customized". In this case, in response to the operation, the mobile phone 10 may perform medley composition on the m audio clips extracted from the k pieces of target audio in the preset order. The preset order is a user-defined order.

In another example, the audio editing interface 701 shown in FIG. 7 may further include three options for inputting a medley composition order of songs. For detailed description, refer to the foregoing description of FIG. 4(c). Details are not described herein again.

In step S102, after determining the m audio clips, the terminal device may determine audio feature information of the m audio clips.

The audio feature information of the audio clip may include at least one of the following: main melody track location information, a style tag, an emotion tag, rhythm information, meter information, or key signature information of the audio clip. It may be understood that the meter described herein is a meter of music, and the key signature is a signature of a key. A specific implementation in which the terminal device obtains the audio feature information of the audio clip is not specifically limited in this embodiment of this application. A process in which the terminal device determines the audio feature information of the m audio clips is not described in detail in this embodiment of this application.

For each of the m audio clips determined by the terminal device, the terminal device may further separate music from human voice for each audio clip by using a music and human voice detection technology.

The first audio clip in the m audio clips is used as an example. The terminal device may separate a human voice from sounds of various musical instruments (such as a piano, a bass, a drum, and a violin) in the first audio clip by using the music and human voice detection technology, and convert, into data in a MIDI format, a plurality of tracks of the musical instruments and the human voice that are obtained through separation. The data in the MIDI format is MIDI information of the first audio clip. Herein, the music and human voice detection technology is not described in detail in this embodiment of this application.

It should be noted that the audio clip may not include a human voice. In this case, the terminal device may separate a plurality of tracks of instrument sounds in the first audio clip by using the music and human voice detection technology, and convert the plurality of tracks of instrument sounds into data in the MIDI format.

Further, the terminal device may determine the m - 1 pieces of transition audio information based on the audio feature information and the MIDI information of the m audio clips and a preset neural network model. One piece of transition audio information in the m - 1 pieces of transition audio information is transition audio information used to splice two audio clips that are sorted consecutively in the m audio clips obtained by the terminal device. Sorting of the m audio clips indicates a medley composition order of the m audio clips. The transition audio information is MIDI information of a transition audio clip. Herein, for detailed description of the process in which the terminal device determines the medley composition order of the m audio clips, refer to related description of step S101. Details are not described herein again.

The preset neural network model may be preset in the terminal device, or may be preset in a server that has a communication connection to the terminal device. This is not limited in this embodiment of this application.

The preset neural network model includes an encoder, an information extraction module, an information generation module, and a decoder. Herein, the encoder, the information extraction module, the information generation module, and the decoder are all sequence model network structures, and the information extraction module is a bidirectional sequence model network structure.

For example, the encoder, the information generation module, and the decoder may be networks such as an RNN, an LSTM, a GRU, or a transformer. The information extraction module may be a network such as a Bi-RNN, a Bi-LSTM, a Bi-GRU, or a transformer.

It should be understood that the preset neural network model includes at least two encoders, at least two information extraction modules, at least one information generation module, and at least one decoder. The at least two encoders have same network structures. The at least two information extraction modules have same network structures. The at least one information generation module has a same network structure. The at least one decoder has a same network structure. In addition, in the preset neural network model, the encoder and the decoder may also have same network structures. It should be noted that a data flow direction of the encoder is opposite to that of the decoder. For example, an input of the encoder may be used as an output of the decoder, and an output of the encoder may be used as an input of the decoder.

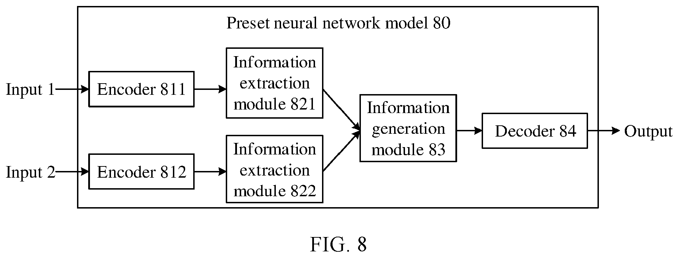

It should be understood that network parameters of the at least two encoders, the at least two information extraction modules, the at least one information generation module, and the at least one decoder are all determined when the preset neural network model is trained. Herein, for detailed description of training the preset neural network model, refer to the following description of training a preset neural network model 80 shown in FIG. 8. Details are not described herein.

In a possible implementation, when a quantity of audio clips that need to be processed by the preset neural network model is m, the preset neural network model includes m inputs and m - 1 outputs. In this case, in the preset neural network model, a quantity of encoders is m, a quantity of information extraction modules is 2 x (m - 1), and quantities of information generation modules and decoders are both m - 1.

In this case, the preset neural network model may simultaneously process information of the m input audio clips, and output MIDI information of m - 1 pieces of transition audio.

In an example, a value of m is 2. FIG. 8 is a schematic diagram of a structure of a preset neural network model according to an embodiment of this application.

As shown in FIG. 8, the preset neural network model 80 includes two encoders configured to receive two inputs. The two encoders are respectively an encoder 811 and an encoder 812. The preset neural network model 80 includes two (namely, 2 x (2 - 1)) information extraction modules. The two information extraction modules are respectively an information extraction module 821 and an information extraction module 822. The preset neural network model 80 further includes one (namely, (2 - 1)) information generation module (namely, an information generation module 83) and one (namely, (2 - 1)) decoder (namely, a decoder 84).

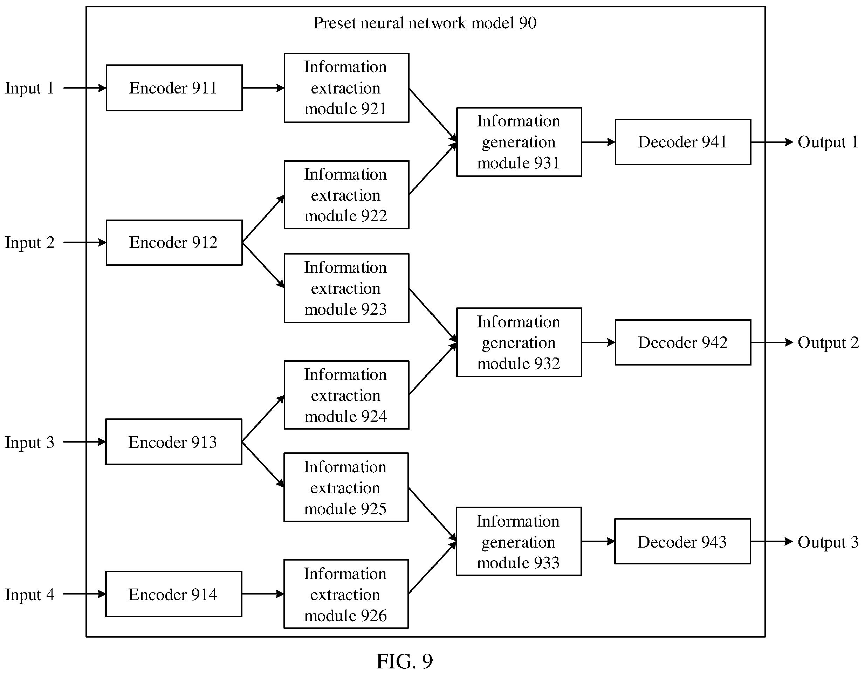

In another example, a value of m is 4. FIG. 9 is a schematic diagram of a structure of another preset neural network model according to an embodiment of this application.

As shown in FIG. 9, a preset neural network model 90 includes four encoders configured to receive four inputs. The four encoders are respectively an encoder 911, an encoder 912, an encoder 913, and an encoder 914. The preset neural network model 90 includes six (namely, 2 x (4 - 1)) information extraction modules. The six information extraction modules are respectively an information extraction module 921, an information extraction module 922, an information extraction module 923, an information extraction module 924, an information extraction module 925, and an information extraction module 926. The preset neural network model 90 includes three (namely, (4 - 1)) information generation modules. The three information generation modules are respectively an information generation module 931, an information generation module 932, and an information generation module 933. The preset neural network model 90 further includes three (namely, (4 - 1)) decoders. The three decoders are respectively a decoder 941, a decoder 942, and a decoder 943.

In another possible implementation, in the preset neural network model, quantities of the encoders and the information extraction modules are both two, and quantities of the information generation modules and the decoders are both one (for example, the preset neural network model shown in FIG. 8). In other words, the preset neural network model includes two inputs and one output.

In this case, the preset neural network model may simultaneously process two inputs (namely, information of two audio clips) at a time, and output one piece of transition audio information. When the quantity of audio clips that need to be processed by the preset neural network model is m, and m is greater than 2, the preset neural network model may perform m - 1 times of serial processing on information of the m audio clips, to obtain the m - 1 pieces of transition audio information. It should be understood that the two audio clips processed by the preset neural network model each time are two audio clips that are adjacent in the medley composition order.

For example, when audio clips that need to be processed by the preset neural network model include an audio clip 1, an audio clip 2, an audio clip 3, and an audio clip 4, namely, a value of m is 4, it is assumed that a medley composition order of the four audio clips is: the audio clip 1→the audio clip 4→the audio clip 3→the audio clip 2. In this case, the terminal device may perform three (namely, (4 - 1)) times of serial processing on information of the four audio clips, to obtain three pieces of transition audio information. Specifically, the terminal device may use the information of the audio clip 1 and the information of the audio clip 4 as two pieces of input information of the preset neural network, so that transition audio information 1 used to splice the audio clip 1 and the audio clip 4 can be obtained. The terminal device may use the information of the audio clip 4 and the information of the audio clip 3 as two pieces of input information of the preset neural network, so that transition audio information 2 used to splice the audio clip 4 and the audio clip 3 can be obtained. The terminal device may further use the information of the audio clip 3 and the information of the audio clip 2 as two pieces of input information of the preset neural network, so that transition audio information 3 used to splice the audio clip 3 and the audio clip 2 can be obtained.

With reference to FIG. 8, the following describes in detail each module in the preset neural network model provided in this embodiment of this application and a process in which each module processes information of audio clips, by using an example in which a value of m is 2, to be specific, the terminal device obtains two audio clips (for example, the two audio clips include a first audio clip and a second audio clip), and a medley composition order is: the first audio clip→the second audio clip. It can be learned from the medley composition order that the first audio clip is a front period in the target medley audio (referred to as a front period for short), and the second audio clip is a back period in the target medley audio (referred to as a back period for short).

Herein, the first audio clip is used as a front period. The audio feature information and the MIDI information of the first audio clip may be referred to as first information. The second audio clip is used as a back period. The audio feature information and the MIDI information of the second audio clip may be referred to as second information. The first information may be used as an input of the preset neural network model 80. The second information may be used as another input of the preset neural network model 80.

It should be noted that a plurality of tracks in the MIDI information in the first information (namely, the MIDI information of the first audio clip) are the same as a plurality of tracks in the MIDI information in the second information (namely, the MIDI information of the second audio clip). Specifically, a quantity of tracks and types of the tracks that are included in the MIDI information in the first information are the same as a quantity of tracks and types of the tracks that are included in the MIDI information in the second information.

For example, the MIDI information in the first information includes three tracks: a human voice track, a piano track, and a violin track. In this case, the MIDI information in the second information also includes the three tracks.

It should be understood that, when the quantity of tracks included in the MIDI information in the first information is assumed to be different from the quantity of tracks included in the MIDI information in the second information, for example, the quantity of tracks included in the MIDI information in the first information is greater than the quantity of tracks included in the MIDI information in the second information, and the MIDI information in the first information includes all track types included in the MIDI information in the second information, the terminal device may add a blank track to the MIDI information in the second information, so that the quantity of tracks included in the MIDI information in the first information is the same as the quantity of tracks included in the MIDI information in the second information.

In this case, the terminal device may input the first information to the encoder 811 as an input (for example, an input 1) of the preset neural network model 80. The encoder 811 may process the received first information and output a first sequence corresponding to the first audio clip. Herein, the first sequence is a sequence obtained after the encoder 811 performs feature extraction on the MIDI information and the audio feature information in the first information. Herein, the first sequence may be understood as a sequence obtained after the encoder 811 performs dimensionality reduction on the first information, or the first sequence may be understood as a sequence obtained after the encoder 811 compresses the first information into latent space.

It should be understood that the first sequence is a one-dimensional sequence in a time sequence, and a length of the first sequence is determined based on a length of the first audio clip. It may be understood that a longer first audio clip indicates a longer first sequence, and a shorter first audio clip indicates a shorter first sequence.

For example, the first sequence may be represented as "{P₁, P₂, ..., Pₛ}", where P represents a feature vector, and s represents a quantity of feature vectors. It should be understood that, because the audio clip has a time sequence feature, the first sequence also has a time sequence feature. In this case, P₁ may be a feature vector corresponding to a start end moment of the audio clip, and Pₛ may be a feature vector corresponding to a tail end moment of the audio clip.

Similarly, the terminal device may input the second information to the encoder 812 as another input (for example, an input 2) of the preset neural network model 80. In this case, the encoder 812 may process the received second information and output a second sequence corresponding to the second audio clip. Herein, for description of the second sequence, refer to the first sequence. Details are not described again.

For example, the second sequence may be represented as "{F₁, F₂, ..., Fₜ}", where F represents a feature vector, and t represents a quantity of feature vectors. Herein, F₁ may be a feature vector corresponding to a start end moment of the audio clip, and Fₜ may be a feature vector corresponding to a tail end moment of the audio clip.

Then, the information extraction module 821 receives the first sequence output by the encoder 811. Because the audio clip has the time sequence feature, and the first audio clip is the front period, after learning the first sequence, the information extraction module 821 may output the first vector corresponding to the tail end moment of the first audio clip. This process may also be understood as that the information extraction module 821 further performs dimensionality reduction on the first sequence. It should be noted that the first vector carries a feature of the first sequence and corresponds to a tail end moment of the first sequence.

Similarly, the information extraction module 822 receives the second sequence output by the encoder 812. After learning the second sequence, the information extraction module 821 may output the second vector corresponding to the start end moment of the second audio clip. This process may also be understood as that the information extraction module 822 further performs dimensionality reduction on the second sequence. It should be noted that the second vector carries a feature of the second sequence and corresponds to a start end moment of the second sequence.

Then, the preset neural network model 80 sums the first vector and the second vector to obtain a third vector. In other words, Third vector = First vector + Second vector. Herein, a sum (namely, the third vector) of a latent space vector (namely, the first vector) corresponding to the tail end moment of the first audio clip and a latent space vector (namely, the second vector) corresponding to the start end moment of the second audio clip may be used as a latent space vector corresponding to a transition audio clip that splices the first audio clip and the second audio clip.

In this way, based on the transition vector, the preset neural network model 80 may determine the transition audio clip used to splice the first audio clip and the second audio clip. Specifically, the preset neural network model 80 inputs the third vector to an information generation module 83, and the information generation module 83 may learn the received third vector and output a third sequence. It should be understood that the third sequence is a sequence formed by a feature vector of the transition audio clip used to splice the first audio clip and the second audio clip.

For example, the third sequence may be represented as "{M₁, M₂, ... Mⱼ}", where M represents a feature vector, and j represents a quantity of feature vectors. Herein, M₁ may be a feature vector corresponding to a start end moment of the transition audio clip used to splice the first audio clip and the second audio clip, and Mⱼ may be a feature vector corresponding to a tail end moment of the transition audio clip.

Then, the decoder 84 receives the third sequence output by the information generation module 83, learns the third sequence, and outputs transition audio information used to splice the first audio clip and the second audio clip, namely, MIDI information of the transition audio clip.

It should be understood that the preset neural network model 80 shown in FIG. 8 may be a neural network model obtained by training in advance based on a plurality of training samples. One training sample includes MIDI information and audio feature information of two audio clips. A tag value of the training sample is MIDI information of a transition audio clip constructed by a domain expert based on the two audio clips. In this case, repeated iterative training is performed on a neural network based on the plurality of training samples, to obtain the preset neural network model shown in FIG. 8 in this embodiment of this application.

In step S103, the terminal device separately inserts, into the MIDI information of the m audio clips, the m - 1 pieces of transition audio information (namely, the MIDI information of the transition audio clip) generated in step S102, to achieve an objective of splicing the MIDI information of the m audio clips by using the m - 1 pieces of transition audio information. In other words, the target medley audio obtained after medley composition is performed on the m target audio clips is generated.

For example, it is assumed that a value of m is 3, the m audio clips include an audio clip 1, an audio clip 2, and an audio clip 3, and the m - 1 pieces of transition audio information include transition audio information 1 and transition audio information 2. In this case, when a medley composition order of the three audio clips is: the audio clip 1→the audio clip 3→the audio clip 2, the transition audio information 1 is transition audio information used to splice the audio clip 1 and the audio clip 3, and the transition audio information 2 is transition audio information used to splice the audio clip 3 and the audio clip 2, the terminal device may insert the transition audio information 1 between MIDI information of the audio clip 1 and MIDI information of the audio clip 3, and insert the transition audio information 2 between the MIDI information of the audio clip 3 and MIDI information of the audio clip 2. In this way, the terminal device generates MIDI information of a target medley audio obtained after medley composition is performed on the audio clip 1, the audio clip 2, and the audio clip 3.

In actual application, after generating the MIDI information of the target medley audio, the terminal device may play the target medley audio for the user. When the user considers that the target medley audio is not desired medley audio, the user may input a second operation to the terminal device. In this case, in response to the second operation, the terminal device adjusts the medley composition order of the m audio clips used in medley composition to obtain the target medley audio, regenerates m - 1 pieces of transition audio information based on the adjusted medley composition order and the m audio clips, and regenerates MIDI information of the target medley audio.

Then, the terminal device may play the regenerated target medley audio for the user. When the user is satisfied with the target medley audio, step S104 may be performed. When the user is dissatisfied with the target medley audio, the user may input the second operation to the terminal device again, so that the terminal device adjusts the medley composition order of the m audio clips again, and regenerates MIDI information of the target medley audio. It can be learned that, through repeated interaction between the terminal device and the user, the target medley audio with which the user is satisfied can be obtained, thereby improving user experience.

In a possible implementation, after generating the MIDI information of the target medley audio, the terminal device displays a MIDI spectrum of the target medley audio on a display panel in a spectrum form. In this case, the second operation of the user may be a drag operation on the MIDI spectrum. Therefore, after receiving the second operation of the user, the terminal device may respond to the second operation, to redetermine a medley composition order of the m audio clips used in medley composition to obtain the target medley audio.

In this case, the terminal device may perform step S102 to redetermine m - 1 pieces of transition audio information based on the redetermined medley composition order of the m audio clips and the m audio clips. Further, the terminal device may regenerate the target medley audio based on the m - 1 pieces of redetermined transition audio information and the m audio clips. Herein, for a process in which the terminal device regenerates the target medley audio, refer to the foregoing detailed description of the process in which the terminal device generates the target medley audio. Details are not described herein again.

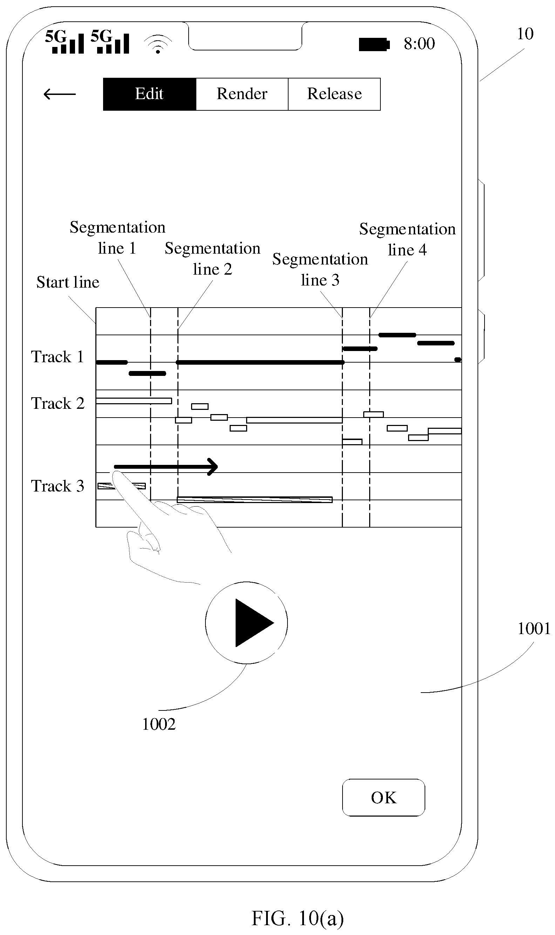

For example, the terminal device is a mobile phone 10, MIDI information of target medley audio generated by the mobile phone 10 includes three tracks, and the target medley audio is medley audio obtained after medley composition is performed on an audio clip 1, an audio clip 2, and an audio clip 3 in a medley composition order of the audio clip 1→the audio clip 3→the audio clip 2. Herein, FIG. 10(a) is a schematic diagram of a second operation according to an embodiment of this application.

As shown in FIG. 10(a), after generating MIDI information of target medley audio for a first time, the mobile phone 10 may display a MIDI spectrum of the target medley audio on the display panel, for example, a MIDI spectrum displayed on a medley audio editing interface 1001 shown in FIG. 10(a).

The MIDI spectrum displayed on the medley audio editing interface 1001 includes three tracks: a track 1 shown by a black strip, a track 2 shown by a white strip, and a track 3 shown by a stripe strip.

A start line on the MIDI spectrum displayed on the medley audio editing interface 1001 is used to mark a start of the target medley audio. The MIDI spectrum displayed on the medley audio editing interface 1001 further includes a plurality of segmentation lines. The plurality of segmentation lines are used to distinguish between different audio clips and transition audio clips in the target medley audio.

For example, based on the medley composition order of the audio clips in the target medley audio, an audio clip located between the start line and a segmentation line 1 is the audio clip 1, an audio clip located between the segmentation line 1 and a segmentation line 2 is a transition audio clip 1 that splices the audio clip 1 and the audio clip 3, an audio clip located between the segmentation line 2 and a segmentation line 3 is the audio clip 3, an audio clip located between the segmentation line 3 and a segmentation line 4 is a transition audio clip 2 that splices the audio clip 3 and the audio clip 2, and an audio clip located on a right side of the segmentation line 4 is the audio clip 2 (the MIDI spectrum in FIG. 10(a) does not show an end line used to mark an end of the target medley audio). It may be understood that a name of each audio clip may also be displayed on the MIDI spectrum displayed on the medley audio editing interface 1001. This is not limited in this embodiment of this application.

After the user may perform an operation (for example, tap by using a finger or a stylus) on a play icon 1002 on the medley audio editing interface 1001, the mobile phone 10 plays the target medley audio for the user in response to the operation. When the user is dissatisfied with the target medley audio, the user may input a second operation to the mobile phone 10. Herein, the second operation may be a drag operation (for example, a slide operation on the display panel by using a finger or stylus) performed by the user on the MIDI spectrum displayed on the medley audio editing interface 1001. For example, the user presses the MIDI spectrum of the audio clip 1 (namely, an area between the start line and the segmentation line 1 in the MIDI spectrum shown in FIG. 10(a)) by using a finger, and slides, in a direction indicated by an arrow in FIG. 10(a), to a location of the MIDI spectrum of the audio clip 2 (namely, an area on the right side of the segmentation line 4 in the MIDI spectrum shown in FIG. 10(a)). In response to the operation, the mobile phone 10 changes the medley composition order of the audio clip 1 and the audio clip 2. In other words, the mobile phone 10 redetermines that a medley composition order of the audio clip 1, the audio clip 2, and the audio clip 3 is: the audio clip 2→the audio clip 3→the audio clip 1.

Further, the mobile phone 10 may regenerate target medley audio based on the audio clip 1, the audio clip 2, the audio clip 3, and the redetermined medley composition order.

In another implementation, the second operation may be an operation that the user inputs a target medley composition order on an audio editing interface displayed after the terminal device generates the MIDI information of the target medley audio. In response to the operation, the terminal device receives the target medley composition order input by the user. In other words, the terminal device redetermines the target medley composition order of the m audio clips.

In this case, the terminal device may perform step S102 to redetermine m - 1 pieces of transition audio information based on the received target medley composition order of the m audio clips and the m audio clips. Further, the terminal device may regenerate target medley audio based on the m - 1 pieces of redetermined transition audio information and the m audio clips.

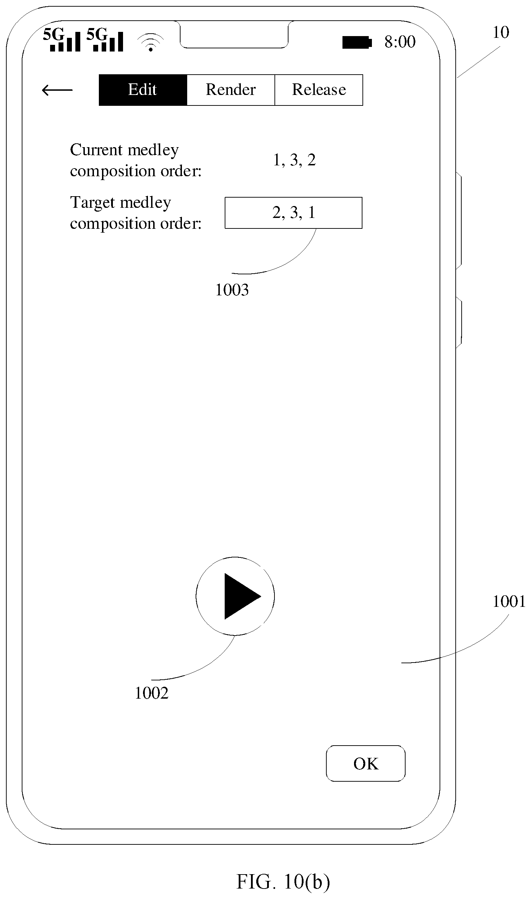

For example, the terminal device is a mobile phone 10, and the target medley audio is medley audio obtained after the mobile phone 10 performs medley composition on an audio clip 1, an audio clip 2, and an audio clip 3 in a medley composition order of the audio clip 1→the audio clip 3→the audio clip 2. Herein, FIG. 10(b) is another schematic diagram of a second operation according to an embodiment of this application.

As shown in FIG. 10(b), after generating MIDI information of target medley audio for a first time, the mobile phone 10 may display a medley audio editing interface 1001 shown in FIG. 10(b) on the display panel. After the user may perform an operation (for example, tap by using a finger or a stylus) on a play icon 1002 on the medley audio editing interface 1001, the mobile phone 10 may play the target medley audio in response to the operation. When the user is dissatisfied with the target medley audio, the user may input a second operation to the mobile phone 10.

Specifically, the user may input an expected target medley composition order in a target medley composition order input box 1003 on the medley audio editing interface 1001. For example, the user inputs "2, 3, 1" in the input box 1003, where "2" may represent an identifier of the audio clip 2, "3" may represent an identifier of the audio clip 3, and "1" may represent an identifier of the audio clip 1. In this case, "2, 3, 1" may represent that a medley composition order of the audio clip 1, the audio clip 2, and the audio clip 3 is: the audio clip 2→the audio clip 3→the audio clip 1. In response to the operation, the mobile phone 10 receives the target medley composition order input by the user. In this way, the mobile phone 10 determines the target medley composition order of the audio clip 1, the audio clip 2, and the audio clip 3.

Then, the mobile phone 10 may regenerate target medley audio based on the audio clip 1, the audio clip 2, the audio clip 3, and the received target medley composition order.

Optionally, the medley audio editing interface 1001 shown in FIG. 10(b) may also display a current medley composition order, for example, "Current medley composition order: 1, 3, 2". It should be understood that the current medley composition order may be used as a reference when the user provides and inputs the target medley composition order.

It should be understood that the foregoing possible implementations of the second operation are merely examples for description, and do not constitute a limitation on the protection scope of this embodiment of this application.

In step S104, optionally, the terminal device may directly save and output the latest MIDI information, generated in step S103, of the target medley audio.

Optionally, the terminal device may further synthesize a time-domain waveform of the target medley audio based on the latest MIDI information, generated in step S103, of the target medley audio, to obtain the target medley audio. Optionally, the terminal device may further save/output the target medley audio.

A specific manner in which the terminal device synthesizes the time-domain waveform of the target medley audio based on the MIDI information of the target medley audio is not limited in this embodiment of this application. For example, the terminal device may load a timbre library for the MIDI information of the target medley audio to synthesize the time-domain waveform of the target medley audio, or may synthesize the time-domain waveform of the target medley audio based on the MIDI information of the target medley audio and a wavetable (the wavetable is a stored file obtained by recording all sounds (including various ranges, various tones, and the like) that can be made by various real musical instruments in advance), or may synthesize the time-domain waveform of the target medley audio based on the MIDI information of the target medley audio and a physical model/a neural network model. Certainly, this is not limited thereto. Herein, the physical model/the neural network model is a pre-constructed model used to synthesize an audio waveform. Details are not described in this embodiment of this application.

It should be understood that, when the terminal device synthesizes the time-domain waveform of the target medley audio based on the MIDI information of the target medley audio, the terminal device synthesizes the time-domain waveform of the target medley audio only based on all musical instrument tracks other than a human voice track in the MIDI information of the target medley audio.

Optionally, the terminal device may receive a third operation of the user; render the latest MIDI information, generated in step S103, of the target medley audio in response to the third operation; and synthesize the time-domain waveform of the target medley audio based on rendered MIDI information. Then, the terminal device further renders the synthesized time-domain waveform of the target medley audio, to obtain rendered target medley audio. Optionally, the terminal device may further save/output the rendered target medley audio.

For detailed description of the process in which the terminal device synthesizes the time-domain waveform of the target medley audio based on the rendered MIDI information, refer to the foregoing description of the process in which the terminal device synthesizes the time-domain waveform of the target medley audio based on the MIDI information of the target medley audio. Details are not described herein again.

The third operation of the user may include a selection operation that is of an audio rendering processing manner and that is input by the user on an audio rendering interface, and a selection operation that is of a processing manner used to synthesize the time-domain waveform of the target medley audio and that is input by the user on the audio rendering interface. The rendering performed on the MIDI information of the target medley audio may include, for example, sound source separation. The processing manner used to synthesize the time-domain waveform of the target medley audio may include, for example, timbre library loading, wavetable synthesis, and physical model synthesis. The rendering performed on the time-domain waveform of the target medley audio may include audio mixing, human voice style transfer, and the like. This is not limited in this embodiment of this application.

Optionally, the terminal device may save the rendered time-domain waveform of the target medley audio as an audio file in any audio format. This is not specifically limited in this embodiment of this application. For example, the terminal device may save the rendered waveform of the target medley audio as an audio file in a WAV format, an audio file in a free lossless audio codec (FLAC) format, an audio file in a moving picture experts group audio layer III (MP3) format, or an audio file in an audio compression format (OGGVobis, ogg). Certainly, this is not limited thereto.

Optionally, the terminal device may further save a project for generating the target medley audio. In this way, the terminal may reset, based on a saved project file, the medley composition order of the m audio clips used in medley composition to obtain the target medley audio, and perform medley composition again. This can improve efficiency of performing medley composition on the m audio clips again in the future.

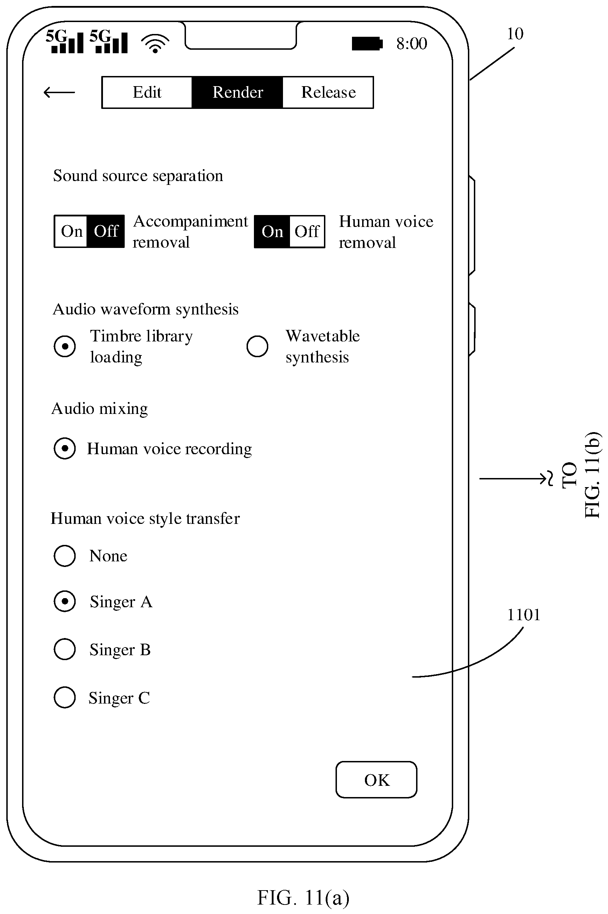

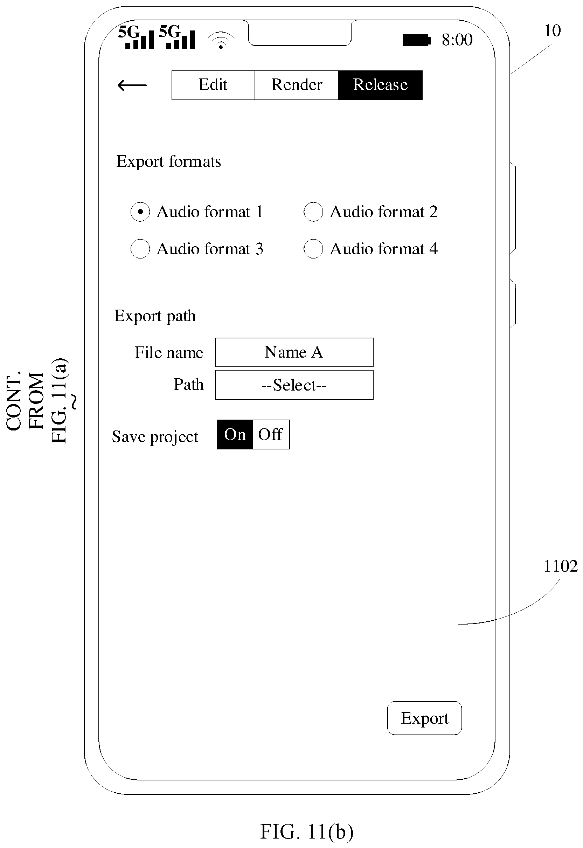

For example, the terminal device is a mobile phone 10. FIG. 11(a) and FIG. 11(b) are a schematic diagram of rendering and outputting MIDI information of target medley audio according to an embodiment of this application.

As shown in FIG. 11(a), after the mobile phone 10 finally determines the MIDI information of the target medley audio, the mobile phone 10 may display an audio rendering interface 1101. The user may input a third operation on the audio rendering interface 1101. The third operation may include: a selection operation that the user selects to enable "Human voice removal" (in FIG. 11(a), a black box of a "Human voice removal" tag indicates enabling, and a white box of the "Human voice removal" tag indicates disabling) under a "Sound source separation" option, a selection operation that the user selects "Timbre library loading" under an "Audio waveform synthesis" option, a selection operation that the user selects "Human voice recording" under an "Audio mixing" option, and a selection operation that the user selects "Singer A" under a "Human voice style transfer" option as a transfer target.

As a response, after the mobile phone 10 receives the third operation of the user and receives an operation (for example, a tap) of the user on an "OK" button on the audio rendering interface 1101, the mobile phone 10 may delete a human voice track or set the human voice track to invalid in the MIDI information of the target medley audio, load a timbre library for the MIDI information of the target medley audio to synthesize a time-domain waveform of the target medley audio, then enable a recording interface to record a human voice for the target medley audio, and transfer the human voice in the target medley audio to a voice of the singer A.

Further, after receiving the third operation of the user and receiving the operation (for example, a tap) of the user on the "OK" button on the audio rendering interface 1101, the mobile phone 10 may display an audio release interface 1102 displayed in FIG. 10(b). In this way, the mobile phone 10 may interact with the user through the audio release interface 1102, and export the target medley audio according to an indication input by the user.

As shown in FIG. 11(b), the mobile phone 10 may receive, under an "Export formats" option on the audio release interface 1102, a selection operation that is input by the user and that is of selecting an audio format for export, for example, an operation of selecting an "Audio format 1". The mobile phone 10 may receive, under an "Export path" option on the audio release interface 1102, an operation that the user inputs a name (for example, a name A) and a path of the target medley audio. The mobile phone 10 may further receive, under a "Save project" option on the audio release interface 1102, an operation that is input by the user and that is of enabling a "Save project" function.

In this way, after the user performs an operation (for example, a tap) on an "Export" button on the audio release interface 1102, the mobile phone 10 saves the target medley audio according to an indication of the user in response to the operation.

In some embodiments, a method part (namely, steps S102 to S104) for determining the transition audio information and generating the target audio in the method provided in this embodiment of this application may also be performed in a process in which the terminal device plays audio for the user in real time. In this case, the method part for determining the transition audio information and generating the target audio in the method provided in this embodiment of this application may be implemented through a functional module of an app that can provide audio listening.

For example, the app that can provide audio listening may be, for example, a cloud music app. For brief description, an example in which the app that can provide audio listening is a cloud music app is used below for description.

Specifically, when providing a listening mode of music for the user, the cloud music app may provide a medley mode. The medley mode may be implemented by performing steps S102 to S104 in the method provided in this embodiment of this application by the terminal device running the cloud music app or a server that is connected to and communicates with the cloud music app. For brief description, the following example is used for description below: The medley mode is implemented by performing steps S102 to S104 in the method provided in this embodiment of this application by the terminal device running the cloud music app.

In this case, optionally, when the terminal device plays music for the user through the cloud music app run on the terminal device, the music played by the terminal device may be music automatically recommended by a cloud music media library, or may be music in a local media library. This is not limited in this embodiment of this application.

In this case, when the terminal device determines, through interaction with the user, to play music for the user in the medley mode, the terminal device may use, as two pieces of target audio, a current piece of music that is being played for the user and a next piece of music that is to be played for the user. Based on the two pieces of target audio and a preset medley composition order, steps S102 to S104 described above are performed, to generate first target medley audio obtained after medley composition is performed on the two pieces of target audio. The preset medley composition order is: the current piece of music that is being played by the terminal device for the user→the next piece of music that is to be played by the terminal device for the user.

It should be noted herein that when the music that is currently played by the terminal device is music automatically recommended by the cloud music media library, in a process of playing the current piece of music for the user, the terminal device may determine the next piece of music automatically recommended to the user. The next piece of music is the next piece of music that is to be played by the terminal for the user.

It should be noted that, before the terminal device completes playing the current piece of music for the user, the terminal device may complete medley composition of the two pieces of determined target audio and obtain the first target medley audio.

Optionally, the terminal device may play the first target medley audio for the user after playing the current piece of music for the user. Further, after playing the first target medley audio for the user, the terminal device plays an original next piece of music for the user.

For example, if the current piece of music that is being played by the terminal device for the user is music 1, and the original next piece of music that is to be played is music 2, the terminal device may play the first target medley audio for the user after completing playing the music 1 for the user. Then, the terminal device plays the music 2 for the user after completing playing the first target medley audio for the user.

Similarly, when the terminal device plays the original next piece of music for the user, the original next piece of music is switched to a new current piece of music that is being played by the terminal device for the user. In this way, the terminal device may repeat the foregoing process to generate second target medley audio obtained after medley composition is performed on the new current piece of music and a next piece of music of the new current piece of music. In addition, the terminal device may play the second medley audio for the user after completing playing the new current piece of music for the user.

It can be learned that when the terminal device plays music for the user in the medley mode, the terminal device may dynamically generate medley audio of a current piece of music and a next piece of music, and play the medley audio for the user, thereby improving user experience.

It may be further understood that, when the terminal device plays music for the user in the medley mode, and the terminal device plays the current piece of music and the next piece of music for the user, the terminal device may play only audio clips that are in the current piece of music and the next piece of music and that are used to generate the medley audio. For example, the terminal device may play only a chorus/climax part in the current piece of music and the next piece of music. This is not limited in this embodiment of this application.

It should be further noted that, in a process in which the terminal device performs, based on the two pieces of determined target audio and the preset medley composition order, steps S102 to S104 to generate the target medley audio (for example, first target medley audio, second target medley audio, and q^{th} target medley audio, where q is a positive integer), the terminal device only needs to perform the process of generating transition audio information once in step S103, and does not need to receive a second operation input by the user.

In addition, a preset rendering mode and a preset export mode of the target medley audio are preset in the medley mode of the cloud music app. The preset rendering mode includes at least one of a sound source separation processing manner, an audio mixing processing manner, a sound transfer manner, and the like. The preset export mode includes an export format of the medley audio, a project indicating whether to save the target medley audio, and the like. Therefore, in step S104, the terminal device does not need to interact with the user to obtain the rendering mode and the export mode of the target medley audio.

It should be understood that the preset rendering mode and the preset export mode that are of the target medley audio and that are preset in the medley mode of the cloud music app may be pre-configured and obtained through interaction between the terminal device and the user, or may be configured and obtained through interaction with the user in a process in which the terminal device plays music for the user. This is not limited herein. It should be further understood that after the preset rendering mode and the preset export mode of the target medley audio are configured, the terminal device may further update the pre-configured preset rendering mode and the pre-configured preset export mode through interaction with the user in a process of playing music for the user. This is not limited in this embodiment of this application.

Certainly, the preset export mode may not include the project indicating whether to save the target medley audio. In this case, when stopping playing music for the user after the interaction with the user, the terminal device may receive, through interaction with the user, an indication that is input by the user and that indicates whether to save the project of the target medley audio, and save the project of the target medley audio according to the indication input by the user. It may be understood that before this, the terminal device may cache projects of all dynamically generated target medley audio.

It should be further understood that a name of the "medley mode" is merely an example for description, and is not intended to limit this embodiment of this application.

In conclusion, this embodiment of this application provides the audio data processing method. According to the method, in this embodiment of this application, the m - 1 pieces of transition audio information used to splice the m audio clips may be generated in the MIDI domain based on the m audio clips. In this way, the MIDI information of the m audio clips may be spliced by using the m - 1 pieces of transition audio information, to obtain the target medley audio obtained after medley composition is performed on the m audio clips. It may be learned that, when medley composition is performed on a plurality of audio clips by using the method of this application, the terminal device may generate a brand new transition audio clip used to splice the plurality of audio clips. Therefore, in the method provided in this embodiment of this application, there is no need to consider a similarity between audio clips used to obtain the target medley audio. In other words, richer and more diversified medley audio can be obtained by using the method provided in this embodiment of this application.

MIDI information of audio is a most original representation form of the audio, and records information such as a note pitch, a note velocity, and note duration of the audio. Therefore, compared with direct medley composition performed on a plurality of audio clips in time domain, in the method provided in this embodiment of this application, generated transition audio information used to splice two audio clips is generated based on an audio music theory. In this way, the medley audio obtained based on the transition audio information sounds more fluent and natural. In addition, data processing in the MIDI domain is more conducive to flexibility and consistency of the medley audio during later rendering.

In addition, when medley composition is performed on the m audio clips by using the method provided in this embodiment of this application, the user may highly participate. Therefore, medley audio with which the user is satisfied can be obtained, thereby implementing high user experience.

The foregoing mainly describes the solutions provided in embodiments of this application from a perspective of a method. To implement the foregoing functions, corresponding hardware structures and/or software modules for performing the functions are included. A person skilled in the art should easily be aware that, in combination with units and algorithm steps in the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the audio data processing apparatus may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example and is merely logical function division. In actual application, another division manner may be used.

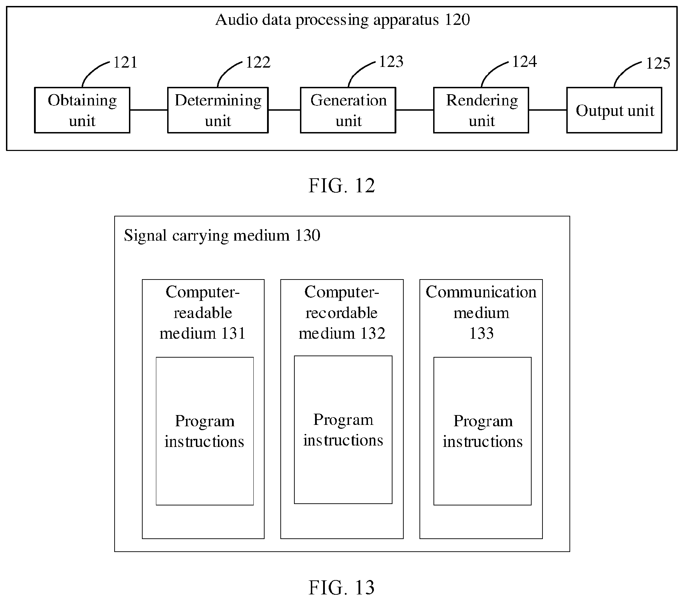

FIG. 12 is a schematic diagram of a structure of an audio data processing apparatus 120 according to an embodiment of this application. The processing apparatus 120 may be configured to perform the foregoing audio data processing method, for example, configured to perform the method shown in FIG. 3. The processing apparatus 120 may include an obtaining unit 121, a determining unit 122, and a generation unit 123.

The obtaining unit 121 is configured to obtain m audio clips. The determining unit 122 is configured to determine m - 1 pieces of transition audio information based on the m audio clips. The generation unit 123 is configured to generate target medley audio based on the m audio clips and the m - 1 pieces of transition audio information. The m - 1 pieces of transition audio information are used to splice the m audio clips. For first transition audio information in the m - 1 pieces of transition audio information, the first transition audio information is used to splice a first audio clip and a second audio clip that are sorted consecutively in the m audio clips. Herein, sorting of the m audio clips indicates a medley composition order of the m audio clips.

For example, with reference to FIG. 3, the obtaining unit 121 may be configured to perform step S101, the determining unit 122 may be configured to perform step S102, and the generation unit 123 may be configured to perform steps S103 and S104.

Optionally, the determining unit 122 is specifically configured to determine the first transition audio information based on first information of the first audio clip and second information of the second audio clip. The first information includes MIDI information and audio feature information of the first audio clip. The second information includes MIDI information and audio feature information of the second audio clip. The first transition audio information includes MIDI information of first transition audio corresponding to the first transition audio information.

For example, with reference to FIG. 3, the determining unit 122 may be configured to perform step S102.

Optionally, the foregoing audio feature information includes at least one of the following: main melody track location information, a style tag, an emotion tag, rhythm information, meter information, or key signature information of the audio clip.

Optionally, the determining unit 122 is specifically configured to determine the first transition audio information based on the first information of the first audio clip, the second information of the second audio clip, and a preset neural network model.

For example, with reference to FIG. 3, the determining unit 122 may be configured to perform step S102.

Optionally, when the first audio clip is located before the second audio clip in the target medley audio, the first transition audio information is determined based on a feature vector representing the first transition audio information, and the feature vector of the first transition audio information is determined based on a first vector and a second vector. The first vector is a feature vector generated at a tail end of a time sequence of the first audio clip based on the first information. The second vector is a feature vector generated at a start end of a time sequence of the second audio clip based on the second information.

Optionally, the determining unit 122 is further configured to determine k pieces of target audio in response to a first operation of a user. The obtaining unit 121 is specifically configured to extract m audio clips from the k pieces of target audio. Herein, 2 ≤ k ≤ m, and k is an integer.

For example, with reference to FIG. 3, the determining unit 122 and the obtaining unit 121 may be configured to perform step S101.

Optionally, the determining unit 122 is further configured to determine the medley composition order of the m audio clips before determining the m - 1 pieces of transition audio information based on the m audio clips.

Optionally, the determining unit 122 is further configured to redetermine a medley composition order of the m audio clips in response to a second operation of the user. The determining unit 122 is further configured to redetermine m - 1 pieces of transition audio information based on the redetermined medley composition order and the m audio clips. The generation unit 123 is further configured to regenerate target medley audio based on the redetermined m - 1 pieces of transition audio information and the m audio clips.

Optionally, the processing apparatus 120 further includes: a rendering unit 124, configured to render the target medley audio in response to a third operation of the user.

For example, with reference to FIG. 3, the rendering unit 124 may be configured to perform step S104.

Optionally, the processing apparatus 120 further includes: an output unit 125, configured to output the target medley audio.

For specific description of the foregoing optional manners, refer to the foregoing method embodiment. Details are not described herein again. In addition, for explanations of any processing apparatus 120 provided above and description of beneficial effect, refer to the foregoing corresponding method embodiment. Details are not described herein again.

For example, with reference to FIG. 1, functions of the obtaining unit 121 and the output unit 125 in the processing apparatus 120 may be implemented by using the touchscreen 150 and the processor 110 in FIG. 1. The determining unit 122, the generation unit 123, and the rendering unit 124 may be implemented by executing the program code in the internal memory 120 in FIG. 1 by the processor 110 in FIG. 1.

FIG. 13 is a schematic diagram of a structure of a signal carrying medium configured to carry a computer program product according to an embodiment of this application. The signal carrying medium is configured to store the computer program product or a computer program for executing a computer process on a computing device.

As shown in FIG. 13, the signal carrying medium 130 may include one or more program instructions. When the one or more program instructions are run by one or more processors, the functions or some of the functions described in FIG. 3 may be provided. Therefore, for example, one or more features with reference to steps S101 to S104 in FIG. 3 may be carried by one or more instructions associated with the signal carrying medium 130. In addition, the program instructions in FIG. 13 are also described as example instructions.

In some examples, the signal carrying medium 130 may include a computer-readable medium 131, for example, but not limited to, a hard disk drive, a compact disc (CD), a digital video disc (DVD), a digital tape, a memory, a read-only memory (ROM), or a random access memory (RAM).

In some implementations, the signal carrying medium 130 may include a computer recordable medium 132, for example, but not limited to, a memory, a read/write (R/W) CD, or an R/W DVD.

In some implementations, the signal carrying medium 130 may include a communication medium 133, for example, but not limited to, a digital and/or an analog communication medium (for example, an optical fiber cable, a waveguide, a wired communication link, or a wireless communication link).

The signal carrying medium 130 may be conveyed by the communication medium 133 in a wireless form (for example, a wireless communication medium that complies with the IEEE 1902.11 standard or another transmission protocol). The one or more program instructions may be, for example, computer-executable instructions or logic implementation instructions.

In some examples, for example, the audio data processing apparatus described in FIG. 3 may be configured to provide various operations, functions, or actions in response to one or more program instructions in the computer-readable medium 131, the computer recordable medium 132, and/or the communication medium 133.

It should be understood that the arrangement described herein is merely used as an example. Therefore, a person skilled in the art appreciates that another arrangement and another element (for example, a machine, an interface, a function, an order, and a functional group) can be alternatively used, and some elements may be omitted together based on a desired result. In addition, many of the described elements are functional entities that can be implemented as discrete or distributed components, or implemented in any suitable combination at any suitable location in combination with another component.

All or some of the foregoing embodiments may be implemented by using software, hardware, firmware, or any combination thereof. When a software program is used to implement embodiments, all or some of the embodiments may be implemented in a form of a computer program product. The computer program product includes one or more computer instructions. When computer-executable instructions are executed on a computer, procedures or functions according to embodiments of this application are all or partially generated. The computer may be a general-purpose computer, a dedicated computer, a computer network, or another programmable apparatus. The computer instructions may be stored in the computer-readable storage medium or may be transmitted from the computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

The foregoing description is merely specific implementations of the present invention, but is not intended to limit the protection scope of the present invention. Any variation or replacement readily figured out by a person skilled in the art within the technical scope disclosed in the present invention shall fall within the protection scope of the claims. Therefore, the protection scope of the present invention shall be subject to the protection scope of the claims.

## Claims

1. An audio data processing method, comprising:
obtaining (S101) m audio clips, wherein m is an integer greater than or equal to 2;
determining (S102) m - 1 pieces of transition audio information based on the m audio clips, wherein the m - 1 pieces of transition audio information are used to splice the m audio clips, first transition audio information in the m - 1 pieces of transition audio information is used to splice a first audio clip and a second audio clip that are sorted consecutively in the m audio clips, and sorting is a medley composition order of the m audio clips; and
generating (S103, S104) target medley audio based on the m audio clips and the m - 1 pieces of transition audio information;
wherein the determining (S102) m - 1 pieces of transition audio information based on the m audio clips comprises:
determining the first transition audio information based on first information of the first audio clip and second information of the second audio clip, wherein the first transition audio information comprises musical instrument digital interface, MIDI, information of first transition audio corresponding to the first transition audio information, and
the first information comprises MIDI information and audio feature information of the first audio clip, and the second information comprises MIDI information and audio feature information of the second audio clip;
**characterized in that**
the determining the first transition audio information based on first information of the first audio clip and second information of the second audio clip comprises:
determining the first transition audio information based on the first information of the first audio clip, the second information of the second audio clip, and a preset neural network model;
wherein when the first audio clip is located before the second audio clip in the target medley audio,
the first transition audio information is determined based on a feature vector representing the first transition audio information, and the feature vector of the first transition audio information is determined based on a first vector and a second vector, wherein the first vector is a feature vector generated at a tail end of a time sequence of the first audio clip based on the first information, and the second vector is a feature vector generated at a start end of a time sequence of the second audio clip based on the second information.

2. The method according to claim 1, wherein the audio feature information comprises at least one of the following: main melody track location information, a style tag, an emotion tag, rhythm information, meter information, or key signature information of the audio clip.

3. The method according to any one of claims 1 to 2, wherein the obtaining m audio clips comprises:
determining k pieces of target audio in response to a first operation of a user, wherein 2 ≤ k ≤ m, and k is an integer; and
extracting the m audio clips from the k pieces of target audio.

4. The method according to any one of claims 1 to 3, wherein before the determining m - 1 pieces of transition audio information based on the m audio clips, the method further comprises:
determining the medley composition order of the m audio clips.

5. The method according to any one of claims 1 to 4, wherein the method further comprises:
redetermining a medley composition order of the m audio clips in response to a second operation of the user;
redetermining m - 1 pieces of transition audio information based on the redetermined medley composition order and the m audio clips; and
regenerating target medley audio based on the redetermined m - 1 pieces of transition audio information and the m audio clips.

6. The method according to any one of claims 1 to 5, wherein the method further comprises:
rendering the target medley audio in response to a third operation of the user.

7. The method according to any one of claims 1 to 6, wherein the method further comprises:
outputting the target medley audio.

8. An audio data processing apparatus, comprising:
an obtaining unit (121), configured to obtain m audio clips, wherein m is an integer greater than or equal to 2;
a determining unit (122), configured to determine m - 1 pieces of transition audio information based on the m audio clips, wherein the m - 1 pieces of transition audio information are used to splice the m audio clips, first transition audio information in the m - 1 pieces of transition audio information is used to splice a first audio clip and a second audio clip that are sorted consecutively in the m audio clips, and sorting is a medley composition order of the m audio clips; and
a generation unit (123), configured to generate target medley audio based on the m audio clips and the m - 1 pieces of transition audio information;
wherein
the determining unit is specifically configured to determine the first transition audio information based on first information of the first audio clip and second information of the second audio clip, wherein the first transition audio information comprises musical instrument digital interface MIDI information of first transition audio corresponding to the first transition audio information, and
the first information comprises MIDI information and audio feature information of the first audio clip, and the second information comprises MIDI information and audio feature information of the second audio clip;
**characterized in that**
the determining unit is specifically configured to determine the first transition audio information based on the first information of the first audio clip, the second information of the second audio clip, and a preset neural network model;
wherein when the first audio clip is located before the second audio clip in the target medley audio,
the first transition audio information is determined based on a feature vector representing the first transition audio information, and the feature vector of the first transition audio information is determined based on a first vector and a second vector, wherein the first vector is a feature vector generated at a tail end of a time sequence of the first audio clip based on the first information, and the second vector is a feature vector generated at a start end of a time sequence of the second audio clip based on the second information.

9. The apparatus according to claim 8, wherein the audio feature information comprises at least one of the following: main melody track location information, a style tag, an emotion tag, rhythm information, meter information, or key signature information of the audio clip.

10. The apparatus according to any one of claims 8 to 9, wherein
the determining unit is further configured to determine k pieces of target audio in response to a first operation of a user, wherein 2 ≤ k ≤ m, and k is an integer; and
the obtaining unit is specifically configured to extract the m audio clips from the k pieces of target audio.

11. The apparatus according to any one of claims 8 to 10, wherein
the determining unit is further configured to determine the medley composition order of the m audio clips before determining the m - 1 pieces of transition audio information based on the m audio clips.

12. The apparatus according to any one of claims 8 to 11, wherein
the determining unit is further configured to redetermine a medley composition order of the m audio clips in response to a second operation of the user, and is further configured to newly determine m - 1 pieces of transition audio information based on the redetermined medley composition order and the m audio clips; and
the generation unit is further configured to regenerate target medley audio based on the redetermined m - 1 pieces of transition audio information and the m audio clips.

13. An audio data processing apparatus, comprising: one or more processors and a transmission interface, wherein the one or more processors receive or send data through the transmission interface, and the one or more processors are configured to invoke program instructions stored in a memory to perform the method according to any one of claims 1 to 7.

14. A computer-readable storage medium, wherein the computer-readable storage medium comprises program instructions, and when the program instructions are run on a computer or a processor, the computer or the processor is enabled to perform the method according to any one of claims 1 to 7.

15. A computer program product, wherein when the computer program product is run on an audio data processing apparatus, the apparatus is enabled to perform the method according to any one of claims 1 to 7.

## Patentansprüche

1. Audiodatenverarbeitungsverfahren, umfassend:
Erlangen (S101) von m Audioclips, wobei m eine ganze Zahl größer oder gleich 2 ist;
Bestimmen (S102) von m - 1 Übergangsaudioinformationselementen basierend auf den m Audioclips, wobei die m - 1 Übergangsaudioinformationselemente zum Zusammenfügen der m Audioclips verwendet werden, wobei die ersten Übergangsaudioinformationen in den m - 1 Übergangsaudioinformationselementen zum Zusammenfügen eines ersten Audioclips und eines zweiten Audioclips verwendet werden, die in den m Audioclips nacheinander angeordnet sind, und wobei die Anordnung eine Medley-Kompositionsreihenfolge der m Audioclips ist; und
Generieren (S103, S104) von Ziel-Medley-Audio basierend auf den m Audioclips und den m - 1 Übergangsaudioinformationselementen;
wobei das Bestimmen (S102) von m - 1 Übergangsaudioinformationselementen basierend auf den m Audioclips Folgendes umfasst:
Bestimmen der ersten Übergangsaudioinformationen basierend auf ersten Informationen des ersten Audioclips und zweiten Informationen des zweiten Audioclips, wobei die ersten Übergangsaudioinformationen Informationen zu einer digitalen Schnittstelle eines Musikinstruments, MIDI-Informationen, des ersten Übergangsaudios umfassen, die den ersten Übergangsaudioinformationen entsprechen, und
die ersten Informationen MIDI-Informationen und Audiomerkmalsinformationen des ersten Audioclips umfassen und die zweiten Informationen MIDI-Informationen und Audiomerkmalsinformationen des zweiten Audioclips umfassen;
**dadurch gekennzeichnet, dass** das Bestimmen der ersten Übergangsaudioinformationen basierend auf ersten Informationen des ersten Audioclips und zweiten Informationen des zweiten Audioclips Folgendes umfasst:
Bestimmen der ersten Übergangsaudioinformationen basierend auf den ersten Informationen des ersten Audioclips, den zweiten Informationen des zweiten Audioclips und eines voreingestellten Modells eines neuronalen Netzes;
wobei, wenn sich der erste Audioclip vor dem zweiten Audioclip in dem Ziel-Medley-Audio befindet,
die ersten Übergangsaudioinformationen basierend auf einem Merkmalsvektor bestimmt werden, der die ersten Übergangsaudioinformationen repräsentiert, und der Merkmalsvektor der ersten Übergangsaudioinformationen basierend auf einem ersten Vektor und einem zweiten Vektor bestimmt wird, wobei der erste Vektor ein Merkmalsvektor ist, der an einem hinteren Ende einer Zeitsequenz des ersten Audioclips basierend auf den ersten Informationen generiert wird, und der zweite Vektor ein Merkmalsvektor ist, der an einem vorderen Ende einer Zeitsequenz des zweiten Audioclips basierend auf den zweiten Informationen generiert wird.

2. Verfahren nach Anspruch 1, wobei die Audiomerkmalsinformationen mindestens eines von Folgendem umfassen: Informationen über eine Lage der Hauptmelodiespur, einem Stil-Tag, einem Emotions-Tag, Rhythmusinformationen, Taktinformationen oder Tonartinformationen des Audioclips.

3. Verfahren nach einem der Ansprüche 1 bis 2, wobei das Erlangen von m Audioclips Folgendes umfasst:
Bestimmen von k Zielaudioelementen als Reaktion auf einen ersten Benutzervorgang, wobei 2 ≤ k ≤ m gilt und k eine ganze Zahl ist; und
Extrahieren der m Audioclips aus den k Zielaudioelementen.

4. Verfahren nach einem der Ansprüche 1 bis 3, wobei das Verfahren vor dem Bestimmen von m - 1 Übergangsaudioinformationselementen basierend auf den m Audioclips ferner Folgendes umfasst:
Bestimmen der Medley-Kompositionsreihenfolge der m Audioclips.

5. Verfahren nach einem der Ansprüche 1 bis 4, wobei das Verfahren ferner Folgendes umfasst:
Neubestimmen der Medley-Kompositionsreihenfolge der m Audioclips als Reaktion auf einen zweiten Benutzervorgang;
Neubestimmen von m - 1 Übergangsaudioinformationselementen basierend auf der neu bestimmten Medley-Kompositionsreihenfolge und den m Audioclips; und
Neugenerieren von Ziel-Medley-Audio basierend auf den neu bestimmten m - 1 Übergangsaudioinformationselementen und den m Audioclips.

6. Verfahren nach einem der Ansprüche 1 bis 5, wobei das Verfahren ferner Folgendes umfasst:
Rendern des Ziel-Medley-Audios als Reaktion auf einen dritten Benutzervorgang.

7. Verfahren nach einem der Ansprüche 1 bis 6, wobei das Verfahren ferner Folgendes umfasst:
Ausgeben des Ziel-Medley-Audios.

8. Audiodatenverarbeitungsvorrichtung, umfassend:
eine Erlangungseinheit (121), die konfiguriert ist, um m Audioclips zu erlangen, wobei m eine ganze Zahl größer oder gleich 2 ist;
eine Bestimmungseinheit (122), die konfiguriert ist, um m - 1 Übergangsaudioinformationselemente basierend auf den m Audioclips zu bestimmen, wobei die m - 1 Übergangsaudioinformationselemente zum Zusammenfügen der m Audioclips verwendet werden, wobei die ersten Übergangsaudioinformationen in den m - 1 Übergangsaudioinformationselementen zum Zusammenfügen eines ersten Audioclips und eines zweiten Audioclips verwendet werden, die in den m Audioclips nacheinander angeordnet sind, und wobei die Anordnung eine Medley-Kompositionsreihenfolge der m Audioclips ist; und
eine Generierungseinheit (123), die konfiguriert ist, um Ziel-Medley-Audio basierend auf den m Audioclips und den m - 1 Übergangsaudioinformationselementen zu generieren;
wobei
die Bestimmungseinheit insbesondere konfiguriert ist, um die ersten Übergangsaudioinformationen basierend auf ersten Informationen des ersten Audioclips und zweiten Informationen des zweiten Audioclips zu bestimmen, wobei die ersten Übergangsaudioinformationen Informationen zu einer digitalen Schnittstelle eines Musikinstruments, MIDI-Informationen, des ersten Übergangsaudios umfassen, die den ersten Übergangsaudioinformationen entsprechen, und
die ersten Informationen MIDI-Informationen und Audiomerkmalsinformationen des ersten Audioclips umfassen und die zweiten Informationen MIDI-Informationen und Audiomerkmalsinformationen des zweiten Audioclips umfassen;
**dadurch gekennzeichnet, dass** die Bestimmungseinheit insbesondere konfiguriert ist, um die ersten Übergangsaudioinformationen basierend auf den ersten Informationen des ersten Audioclips, den zweiten Informationen des zweiten Audioclips und eines voreingestellten Modells eines neuronalen Netzes zu bestimmen;
wobei, wenn sich der erste Audioclip vor dem zweiten Audioclip in dem Ziel-Medley-Audio befindet,
die ersten Übergangsaudioinformationen basierend auf einem Merkmalsvektor bestimmt werden, der die ersten Übergangsaudioinformationen repräsentiert, und der Merkmalsvektor der ersten Übergangsaudioinformationen basierend auf einem ersten Vektor und einem zweiten Vektor bestimmt wird, wobei der erste Vektor ein Merkmalsvektor ist, der an einem hinteren Ende einer Zeitsequenz des ersten Audioclips basierend auf den ersten Informationen generiert wird, und der zweite Vektor ein Merkmalsvektor ist, der an einem vorderen Ende einer Zeitsequenz des zweiten Audioclips basierend auf den zweiten Informationen generiert wird.

9. Vorrichtung nach Anspruch 8, wobei die Audiomerkmalsinformationen mindestens eines von Folgendem umfassen: Informationen über eine Lage der Hauptmelodiespur, einem Stil-Tag, einem Emotions-Tag, Rhythmusinformationen, Taktinformationen oder Tonartinformationen des Audioclips.

10. Vorrichtung nach einem der Ansprüche 8 bis 9, wobei
die Bestimmungseinheit ferner konfiguriert ist, um k Zielaudioelemente als Reaktion auf einen ersten Benutzervorgang zu bestimmen, wobei 2 ≤ k ≤ m gilt und k eine ganze Zahl ist; und
die Erlangungseinheit insbesondere konfiguriert ist, um die m Audioclips aus den k Zielaudioelementen zu extrahieren.

11. Vorrichtung nach einem der Ansprüche 8 bis 10, wobei
die Bestimmungseinheit ferner konfiguriert, um die Medley-Kompositionsreihenfolge der m Audioclips vor dem Bestimmen der m - 1 Übergangsaudioinformationselemente basierend auf den m Audioclips zu bestimmen.

12. Vorrichtung nach einem der Ansprüche 8 bis 11, wobei
die Bestimmungseinheit ferner konfiguriert ist, um als Reaktion auf einen zweiten Benutzervorgang eine Medley-Kompositionsreihenfolge der m Audioclips neu zu bestimmen, und konfiguriert ist, um basierend auf der neu bestimmten Medley-Kompositionsreihenfolge und den m Audioclips m - 1 Übergangsaudioinformationselemente neu zu bestimmen; und
die Generierungseinheit ferner konfiguriert ist, um basierend auf den neu bestimmten m - 1 Übergangsaudioinformationselementen und den m Audioclips Ziel-Medley-Audio neu zu generieren.

13. Audiodatenverarbeitungsvorrichtung, umfassend: einen oder mehrere Prozessoren und eine Übertragungsschnittstelle, wobei der eine oder die mehreren Prozessoren Daten über die Übertragungsschnittstelle empfangen oder senden und der eine oder die mehreren Prozessoren konfiguriert sind, um auf einem Speicher gespeicherte Programmanweisungen aufzurufen, um das Verfahren nach einem der Ansprüche 1 bis 7 durchzuführen.

14. Computerlesbares Speichermedium, wobei das computerlesbare Speichermedium Programmanweisungen umfasst, und wenn die Programmanweisungen auf einem Computer oder Prozessor ausgeführt werden, der Computer oder der Prozessor dazu befähigt wird, das Verfahren nach einem der Ansprüche 1 bis 7 durchzuführen.

15. Computerprogrammprodukt, wobei, wenn das Computerprogrammprodukt auf einer Audiodatenverarbeitungsvorrichtung ausgeführt wird, die Vorrichtung dazu befähigt wird, das Verfahren nach einem der Ansprüche 1 bis 7 durchzuführen.

## Revendications

1. Procédé de traitement de données audio, comprenant :
l'obtention (S101) de m clips audio, dans lequel m est un entier supérieur ou égal à 2 ;
la détermination (S102) de m - 1 éléments d'information audio de transition sur la base des m clips audio, dans lequel les m - 1 éléments d'information audio de transition sont utilisés pour raccorder les m clips audio, les premiers éléments d'information audio de transition dans les m - 1 éléments d'information audio de transition sont utilisés pour raccorder un premier clip audio et un second clip audio qui sont triés consécutivement dans les m clips audio, et le tri est un ordre de composition de pot-pourri des m clips audio ; et
la génération (S103, S104) de l'audio de pot-pourri cible sur la base des m clips audio et des m - 1 éléments d'information audio de transition ;
dans lequel la détermination (S102) de m - 1 éléments d'information audio de transition sur la base des m clips audio comprend :
la détermination des premières informations audio de transition sur la base de premières informations du premier clip audio et de secondes informations du second clip audio, dans lequel les premières informations audio de transition comprennent des informations d'interface numérique d'instrument de musique, MIDI, du premier audio de transition correspondant aux premières informations audio de transition, et
les premières informations comprennent des informations MIDI et des informations de caractéristiques audio du premier clip audio, et les secondes informations comprennent des informations MIDI et des informations de caractéristiques audio du second clip audio ;
**caractérisée en ce que** la détermination des premières informations audio de transition sur la base des premières informations du premier clip audio et des secondes informations du second clip audio, comprend :
la détermination des premières informations audio de transition sur la base des premières informations du premier clip audio, des secondes informations du second clip audio et d'un modèle de réseau neuronal prédéfini ;
dans lequel, lorsque le premier clip audio est situé avant le second clip audio dans l'audio de pot-pourri cible,
les premières informations audio de transition sont déterminées sur la base d'un vecteur de caractéristiques représentant les premières informations audio de transition, et le vecteur de caractéristiques des premières informations audio de transition est déterminé sur la base d'un premier vecteur et d'un second vecteur, dans lequel le premier vecteur est un vecteur de caractéristiques généré à la fin d'une séquence temporelle du premier clip audio sur la base des premières informations, et le second vecteur est un vecteur de caractéristiques généré au début d'une séquence temporelle du second clip audio sur la base des secondes informations.

2. Procédé selon la revendication 1, dans lequel les informations de caractéristiques audio comprennent au moins l'un des éléments suivants : des informations sur l'emplacement de la piste de mélodie principale, une étiquette de style, une étiquette d'émotion, des informations sur le rythme, des informations sur la mesure ou des informations sur la signature tonale du clip audio.

3. Procédé selon l'une quelconque des revendications 1 et 2, dans lequel l'obtention de m clips audio comprend :
la détermination de k éléments audio cibles en réponse à une première opération d'un utilisateur, dans lequel 2≤k≤m, et k est un entier ; et
l'extraction des m clips audio à partir des k éléments audio cibles.

4. Procédé selon l'une quelconque des revendications 1 à 3, dans lequel, avant la détermination de m - 1 éléments d'information audio de transition sur la base des m clips audio, le procédé comprend en outre :
la détermination de l'ordre de composition de pot-pourri des m clips audio.

5. Procédé selon l'une quelconque des revendications 1 à 4, dans lequel le procédé comprend en outre :
la redétermination d'un ordre de composition de pot-pourri des m clips audio en réponse à une deuxième opération de l'utilisateur ;
la redétermination de m - 1 éléments d'information audio de transition sur la base de l'ordre de composition de pot-pourri redéterminé et des m clips audio ; et
la régénération de l'audio de pot-pourri cible sur la base des m -1 éléments d'information audio de transition redéterminés et des m clips audio.

6. Procédé selon l'une quelconque des revendications 1 à 5, dans lequel le procédé comprend en outre :
le rendu de l'audio de pot-pourri cible en réponse à une troisième opération de l'utilisateur.

7. Procédé selon l'une quelconque des revendications 1 à 6, dans lequel le procédé comprend en outre :
la sortie de l'audio de pot-pourri cible.

8. Appareil de traitement de données audio, comprenant :
une unité d'obtention (121), configurée pour obtenir m clips audio, dans lequel m est un entier supérieur ou égal à 2 ;
une unité de détermination (122), configurée pour déterminé m - 1 éléments d'information audio de transition sur la base des m clips audio, dans lequel les m - 1 éléments d'information audio de transition sont utilisés pour raccorder les m clips audio, les premiers éléments d'information audio de transition dans les m - 1 éléments d'information audio de transition sont utilisés pour raccorder un premier clip audio et un second clip audio qui sont triés consécutivement dans les m clips audio, et le tri est un ordre de composition de pot-pourri des m clips audio ; et
une unité de génération (123), configurée pour générer un audio de pot-pourri cible sur la base des m clips audio et des m - 1 éléments d'information audio de transition ;
dans lequel
l'unité de détermination est spécifiquement configurée pour déterminer les premières informations audio de transition sur la base de premières informations du premier clip audio et de secondes informations du second clip audio, dans lequel les premières informations audio de transition comprennent des informations d'interface numérique d'instrument de musique, MIDI, du premier audio de transition correspondant aux premières informations audio de transition, et
les premières informations comprennent des informations MIDI et des informations de caractéristiques audio du premier clip audio, et les secondes informations comprennent des informations MIDI et des informations de caractéristiques audio du second clip audio ;
**caractérisé en ce que** l'unité de détermination est spécifiquement configurée pour déterminer les premières informations audio de transition sur la base des premières informations du premier clip audio, des secondes informations du second clip audio et d'un modèle de réseau neuronal prédéfini ;
dans lequel, lorsque le premier clip audio est situé avant le second clip audio dans l'audio de pot-pourri cible,
les premières informations audio de transition sont déterminées sur la base d'un vecteur de caractéristiques représentant les premières informations audio de transition, et le vecteur de caractéristiques des premières informations audio de transition est déterminé sur la base d'un premier vecteur et d'un second vecteur, dans lequel le premier vecteur est un vecteur de caractéristiques généré à la fin d'une séquence temporelle du premier clip audio sur la base des premières informations, et le second vecteur est un vecteur de caractéristiques généré au début d'une séquence temporelle du second clip audio sur la base des secondes informations.

9. Appareil selon la revendication 8, dans lequel les informations de caractéristiques audio comprennent au moins l'un des éléments suivants : des informations sur l'emplacement de la piste de mélodie principale, une étiquette de style, une étiquette d'émotion, des informations sur le rythme, des informations sur la mesure ou des informations sur la signature tonale du clip audio.

10. Appareil selon l'une quelconque des revendications 8 et 9, dans lequel
l'unité de détermination est en outre configurée pour déterminer k éléments audio cibles en réponse à une première opération d'un utilisateur, dans lequel 2≤k≤m, et k est un entier ; et
l'unité d'obtention est spécifiquement configurée pour extraire les m clips audio des k éléments d'audio cibles.

11. Appareil selon l'une quelconque des revendications 8 à 10, dans lequel
l'unité de détermination est en outre configurée pour déterminer l'ordre de composition de pot-pourri des m clips audio avant de déterminer les m - 1 éléments d'information audio de transition sur la base des m clips audio.

12. Appareil selon l'une quelconque des revendications 8 à 11, dans lequel
l'unité de détermination est en outre configurée pour redéterminer l'ordre de composition de pot-pourri des m clips audio en réponse à une deuxième opération de l'utilisateur, et est en outre configurée pour déterminer de nouveau m - 1 éléments d'information audio de transition sur la base de l'ordre de composition de pot-pourri redéterminé et des m clips audio ; et
l'unité de génération est en outre configurée pour régénérer l'audio de pot-pourri cible sur la base des m -1 éléments d'information audio de transition redéterminés et des m clips audio.

13. Appareil de traitement de données audio, comprenant : un ou plusieurs processeurs et une interface de transmission, dans lequel les un ou plusieurs processeurs reçoivent ou envoient des données via l'interface de transmission, et les un ou plusieurs processeurs sont configurés pour invoquer des instructions de programme stockées dans une mémoire afin de réaliser le procédé selon l'une quelconque des revendications 1 à 7.

14. Support de stockage lisible par ordinateur, dans lequel le support de stockage lisible par ordinateur comprend des instructions de programme, et lorsque les instructions de programme sont exécutées sur un ordinateur ou un processeur, l'ordinateur ou le processeur est activé pour réaliser le procédé selon l'une quelconque des revendications 1 à 7.

15. Produit de programme informatique, dans lequel, lorsque le produit de programme informatique s'exécute sur un appareil de traitement de données audio, l'appareil est activé pour réaliser le procédé selon l'une quelconque des revendications 1 à 7.
